(19) **Europäisches Patentamt / European Patent Office / Office européen des brevets**

(11) **EP 4 607 101 A1**

(12) **EUROPEAN PATENT APPLICATION**
published in accordance with Art. 153(4) EPC

(43) Date of publication:
27.08.2025 Bulletin 2025/35

(21) Application number: 23918178.7

(22) Date of filing: 22.08.2023

(51) International Patent Classification (IPC):
$F24F\ 3/00^{(2006.01)}$    $F24F\ 11/46^{(2018.01)}$
$F24F\ 11/61^{(2018.01)}$    $F24F\ 11/64^{(2018.01)}$
$F24F\ 11/85^{(2018.01)}$    $F24F\ 11/88^{(2018.01)}$
$F24F\ 110/12^{(2018.01)}$    $F24F\ 110/22^{(2018.01)}$

(52) Cooperative Patent Classification (CPC):
**F24F 3/00; F24F 11/46; F24F 11/61; F24F 11/85;**
**F24F 11/88;** F24F 2110/12; F24F 2110/22;
F24F 2110/64

(86) International application number:
**PCT/CN2023/114293**

(87) International publication number:
**WO 2024/156177 (02.08.2024 Gazette 2024/31)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 28.01.2023 CN 202310078863
22.02.2023 CN 202310155043

(71) Applicant: **Qingdao Hisense Hitachi Air-Conditioning Systems Co., Ltd.**
**Qingdao, Shandong 266555 (CN)**

(72) Inventors:
• **SHI, Jingfeng**
 **Qingdao, Shandong 266555 (CN)**

• **MENG, Jianjun**
 **Qingdao, Shandong 266555 (CN)**
• **ZHANG, Wenqiang**
 **Qingdao, Shandong 266555 (CN)**
• **RUAN, Daiwei**
 **Qingdao, Shandong 266555 (CN)**
• **WANG, Xiyuan**
 **Qingdao, Shandong 266555 (CN)**
• **ZHANG, Guoxuan**
 **Qingdao, Shandong 266555 (CN)**
• **WEI, Feng**
 **Qingdao, Shandong 266555 (CN)**
• **SHENG, Kai**
 **Qingdao, Shandong 266555 (CN)**

(74) Representative: **Petraz, Gilberto Luigi et al**
**GLP S.r.l.**
**Viale Europa Unita, 171**
**33100 Udine (IT)**

(54) **AIR CONDITIONING SYSTEM AND CONTROL METHOD THEREFOR**

(57) Provided is an air-conditioning system, including a cooling tower, a chiller unit, and a controller. The controller is configured to: obtaining a current operating condition of the cooling tower and a plurality of groups of control strategies under the current operating condition. The control strategies include a design of a cooling water temperature difference, a design of a chilled water flow rate and a first approach degree. First operating powers of the cooling tower corresponding to the plurality of groups of control strategies under the current operating condition is determined in accordance with the plurality of groups of control strategies and a first energy consumption model. A target control strategy is determined in accordance with the first operating powers of the cooling tower corresponding to the plurality of groups of control strategies. A target operating frequency of the cooling tower is determined in accordance with a minimum first operating power of the cooling tower and a second energy consumption model. The cooling tower is controlled to operate in accordance with the target control strategy and the target operating frequency.

**(Cont. next page)**

EP 4 607 101 A1

obtaining a current operating condition and a plurality of groups of control strategies under the current operating condition — S101

determining first operating powers of the cooling tower corresponding to respective groups of control strategies under the current operating condition according to the current operating condition, the plurality of groups of control strategies, and a first energy consumption model — S102

determining a target control strategy according to the first operating powers of the cooling tower corresponding to respective groups of control strategies — S103

determining a target operating frequency of the cooling tower according to the first operating powers corresponding to the target control strategy and a second energy consumption model — S104

controlling the cooling tower to operate according to the target control strategy and the target operating frequency — S105

FIG. 5

**Description**

## AIR CONDITIONING SYSTEM AND CONTROL METHOD THEREFOR

The present application claims priority of Chinese patent application No. 202310155043.6, filed on February 22, 2023, and Chinese patent application No. 202310078863.X, filed on January 28, 2023, which are incorporated herein by reference in its entirety.

## TECHNICAL FIELD

The present disclosure relates to technical field of air-conditioning, in particular to an air-conditioning system and a control method thereof.

## BACKGROUND

With development of social economy, people's living standards are getting incrementally higher, application of air-conditioning systems in daily life are increasingly extensive. An air-conditioning system includes a central air-conditioning system and a chiller unit system.

A refrigeration process of the central air-conditioning system and chiller unit system involves compression, heat dissipation, evaporation and heat absorption of a refrigeration medium. The refrigeration medium is circulated in a refrigeration circuit to absorb heat in the indoor air and reduce temperature of the indoor air. Thus, a refrigeration cycle is realized.

## SUMMARY

In one aspect, an air-conditioning system is provided, which includes a cooling tower, a chiller unit, and a controller. The cooling tower is configured to assist cooling water to reduce temperature. The chiller unit includes a condenser A cooling water circuit consists of the condenser and the cooling tower. The cooling water is cycled in the cooling water circuit. The controller is electrically connected to the cooling tower and the chiller unit. The controller is configured to: obtain a current operating condition of the cooling tower and a plurality of groups of control strategies under the current operating condition, where the current operating condition is determined through a current outdoor dry-bulb temperature and a current outdoor relative humidity reading, where a control strategy includes a designed cooling water temperature difference, a designed cooling water flow rate, and a first approach degree; determine first operating powers of the cooling tower corresponding to the plurality of groups of control strategies under the current operating condition according to the current operating condition, the plurality of groups of control strategies, and a first energy consumption model, where the first energy consumption model is configured to represent a relationship between the first operating powers of the cooling tower and the control strategies; determine a target control strategy according to the first operating powers of the cooling tower corresponding to the plurality of groups of control strategies, where the target control strategy is a control strategy corresponding to a minimum first operating power of the cooling tower in the plurality of groups of control strategies; determine a target operating frequency of the cooling tower according to the minimum first operating power of the cooling tower and a second energy consumption model, where the second energy consumption model is configured to represent a relationship between the first operating powers of the cooling tower and the target operating frequency; and control the cooling tower to operate according to the target control strategy and the target operating frequency.

In another aspect, a control method of air-conditioning system is provided. The air-conditioning system includes a cooling tower and a chiller unit. The cooling tower is configured to assist cooling water to reduce temperature. The chiller unit includes a condenser. A cooling water circuit consists of the condenser and the cooling tower. The cooling water is cycled in the cooling water circuit. The method includes obtaining a current operating condition of the cooling tower and a plurality of groups of control strategies under the current operating condition, where the current operating condition is determined through a current outdoor dry-bulb temperature and a current outdoor relative humidity reading, where a control strategy includes a designed cooling water temperature difference, a designed cooling water flow rate, and a first approach degree; determining first operating powers of the cooling tower corresponding to the plurality of groups of control strategies under the current operating condition according to the current operating condition, the plurality of groups of control strategies, and a first energy consumption model, where the first energy consumption model is configured to represent a relationship between the first operating powers of the cooling tower and the control strategies; determining a target control strategy according to the first operating powers of the cooling tower corresponding to the plurality of groups of control strategies, where the target control strategy is a control strategy corresponding to a minimum first operating power of the cooling tower in the plurality of groups of control strategies; determining a target operating frequency of the cooling tower according to the minimum first operating power of the cooling tower and a second energy consumption model, where the second energy consumption model is configured to represent a relationship between the first operating powers of the cooling tower and the target operating frequency; and controlling the cooling tower to operate according to the target control strategy and the target operating frequency.

In yet another aspect, an air-conditioning system is provided including at least two air-conditioning devices and a controller. The controller is electrically connected to the two air-conditioning devices. The controller is configured to: obtain a total predicted cooling load value of the air-conditioning system at a predicting time according to outdoor temperatures, outdoor relative humidity readings, and total actual cooling load values of the air-conditioning system under historical times; obtain total coefficients of performance of the air-conditioning system corresponding to various startup modes according to the total predicted cooling load value and an operating power of each air-conditioning device, wherein the various startup modes includes that at least one air-conditioning device of the at least two air-conditioning devices is turned on; and obtain a target startup mode and serving the target startup mode as a startup mode of the air-conditioning system at the predicting time, where the target startup mode is a startup mode of the air-conditioning system corresponding to a maximum total coefficient of performance in the total coefficients of performance corresponding to the various startup modes.

In yet another aspect, a control method of air-conditioning system is provided, including: obtaining a total predicted cooling load value of the air-conditioning system at a predicting time according to outdoor temperatures, outdoor relative humidity readings, and total actual cooling load values of the air-conditioning system under historical times; obtain total coefficients of performance of the air-conditioning system corresponding to various startup modes according to the total predicted cooling load value and an operating power of each air-conditioning device, wherein the various startup modes include that at least one air-conditioning device of the at least two air-conditioning devices is turned on; and obtain a target startup mode and serving the target startup mode as a startup mode of the air-conditioning system at the predicting time, wherein the target startup mode is a startup mode of the air-conditioning system corresponding to a maximum total coefficient of performance in the total coefficients of performance corresponding to the various startup modes.

## BRIEF DESCRIPTION OF THE DRAWINGS

FIG. 1 is a structure diagram of an air-conditioning system according to some examples.
FIG. 2 is a structure diagram of a chiller according to some examples.
FIG. 3 is a structure diagram of another chiller according to some examples.
FIG. 4 is a structure diagram of a controller according to some examples.
FIG. 5 is a flow chart of a control method of the air-conditioning system according to some examples.
FIG. 6 is a structure diagram of another controller according to some examples.
FIG. 7 is a block diagram of another air-conditioning system according to some examples.
FIG. 8 is a block diagram of an air-conditioning device according to some examples.
FIG. 9 is a flow chart of another control method of the air-conditioning system according to some examples.
FIG. 10 is a flow chart of yet another control method of the air-conditioning system according to some examples.
FIG. 11 is a structure diagram of a neural network for predicting cooling load value according to some examples.
FIG. 12 is a flow chart of yet another control method of the air-conditioning system according to some examples.
FIG. 13 is a flow chart of yet another control method of the air-conditioning system according to some examples.
FIG. 14 is a flow chart of yet another control method of the air-conditioning system according to some examples.
FIG. 15 is a flow chart of yet another control method of the air-conditioning system according to some examples.
FIG. 16 is a flow chart of yet another control method of the air-conditioning system according to some examples.
FIG. 17 is a flow chart of a control method of the chiller unit system according to some examples.

## DETAILED DESCRIPTION

A clear and complete description for examples in the present disclosure is given below in conjunction with the drawings. Apparently, described embodiments are only a part of the examples in the present disclosure, not all of them. Based on the examples in the present disclosure, all other examples acquired by a person having ordinary skill in the art fall within the protection scope of the present disclosure.

Unless the context otherwise requires, throughout Description and Claims, the term "comprise" and its other forms such as the third person singular "comprises" and the present participle "comprising" are interpreted in a way of open or inclusive, namely, "comprising, but not limited to". In explanation of Description, terms such as "one embodiment", "some embodiments", "exemplary embodiments", "example", "specific example", or "some examples", which are intended to represent that specific features, structures, materials or characteristics associated with an embodiment or example are included in at least one embodiment or example of the present disclosure. exemplary representation of the above terms does not necessarily refer to a same embodiment or example. In addition, the specific features, structures, materials or characteristics may be included in any one or more embodiments or examples in any appropriate manner.

Hereinafter, terms such as "first" and "second" are used for descriptive purposes only and are not to be understood as indicating or implying relative importance or as implicitly indicating the quantity of technical features indicated. Thus, a feature defined as "first" or "second" may explicitly or implicitly include one or more such features. In the description of an example of the present disclosure, "multiple" means two or more unless otherwise stated.

In describing some embodiments, the expression "connection" and its extension may be used. The term "connection" should be understood in a broad sense, for example, "connection" may be a fixed connection, a detachable connection, formed as a whole. It may be directly connected or indirectly connected through an intermediary.

"At least one of A, B, and C" has the same meaning as "at least one of A, B, or C" and includes the following combinations of A, B, and C: only A, only B, or only C; combination of A and B, combination of A and C, combination of B and C, or combination of A, B and C.

"A and/or B" includes the following three combinations: only A, only B, or a combination of A and B.

As used herein, in accordance with the context, the term "if" is optionally interpreted to mean "when...", "in response to determination of...", or " in response to detection of...". Similarly, in accordance with the context, the expression "if it is determined..." or "if [stated condition or event] is detected" is optionally interpreted to mean "in determining...", " in response to determination of...", "upon detection of [the stated condition or event]", or "in response to detection of [the stated condition or event]".

The use of "applicable to" or "configured to" means an open or inclusive expression, which does not exclude devices that are suitable for or configured to perform additional tasks or steps.

Furthermore, the use of "based on" means openness and inclusiveness, since a process, step, calculation or other action "based on" one or more of conditions or values may in practice be based on additional conditions or beyond the values.

As used herein, "about", "roughly" or "approximately" includes a stated value and an average value within an acceptable deviation range of a particular value, as determined by a person having ordinary skill in the art taking into account a measurement in question and an error associated with the measurement of a particular quantity (i.e., the limitations of the measurement system).

In a central air-conditioning system, a chiller unit needs to compress and circulate refrigerant to reduce an indoor temperature. Therefore, a large amount of electrical energy is required to be consumed, having higher energy consumption. In this case, energy conservation may be achieved by optimizing the power and other parameters of the chiller unit to reduce energy consumption. In general, the energy consumption of a chiller unit may be reduced through regular maintenance or control management to the load of the chiller unit.

A cooling tower in the central air-conditioning system needs to expose hot or cold water to the air, by means of evaporation to reduce temperature of the water. In order to achieve efficient heat exchange, a large amount of air is required to facilitate heat transfer between the water and the air. Therefore, the cooling tower needs a fan with larger power. However, a large power fan needs to consume more electrical energy during operation, which will increase energy consumption of the cooling tower.

For example, in a case where the central air-conditioning system is operating in a full-load operating condition, electricity consumption of the cooling tower accounts for 12% to 15% of total electricity consumption. Therefore, in the central air-conditioning system, energy conservation to the cooling tower is performed for optimization, which may also reduce energy consumption of the central air-conditioning system.

For example, the cooling tower may be maintained and cleaned regularly to keep a higher working efficiency, so as to reduce the energy consumption of the cooling tower. However, maintaining and cleaning the cooling tower requires investment of manpower, time and resources, resulting in increased maintenance costs of the cooling tower. In addition, the cooling tower needs to be shut down during maintenance, which affects continuous operations of a system.

For example, operating parameters of the cooling tower may also be adjusted according to changes of seasons and ambient temperature to improve working efficiency of the cooling tower and reduce the energy consumption. However, the above method needs to be provided a complex control system and a detecting device to the air-conditioning system, which increases complexity and maintenance difficulty of the air-conditioning system.

Based on that, some examples of the present disclosure provide an air-conditioning system. In the central air-conditioning system, according to historical data and predetermined data of the central air-conditioning system under different operating conditions in the historical data, a first energy consumption model and a second energy consumption model are built. According to the first energy consumption model, multiple first operating powers of the cooling tower under a current operating condition is able to be obtained. Based on a minimum first operating power under the current operating condition, a target operating frequency under the current operating condition is able to be obtained according to the second energy consumption model, so as to control the cooling tower to operate in accordance with the target operating frequency, an effect of reducing energy consumption may be achieved.

For example, the air-conditioning system is a central air-conditioning system, or any other type of air-conditioning systems, which is not limited in the present disclosure.

An operating power of the cooling tower in the present disclosure refers to an operating power of a cooling tower fan in the cooling tower. An operating frequency of the cooling tower refers to an operating frequency of the cooling tower fan in the cooling tower, which will not be repeated hereinafter.

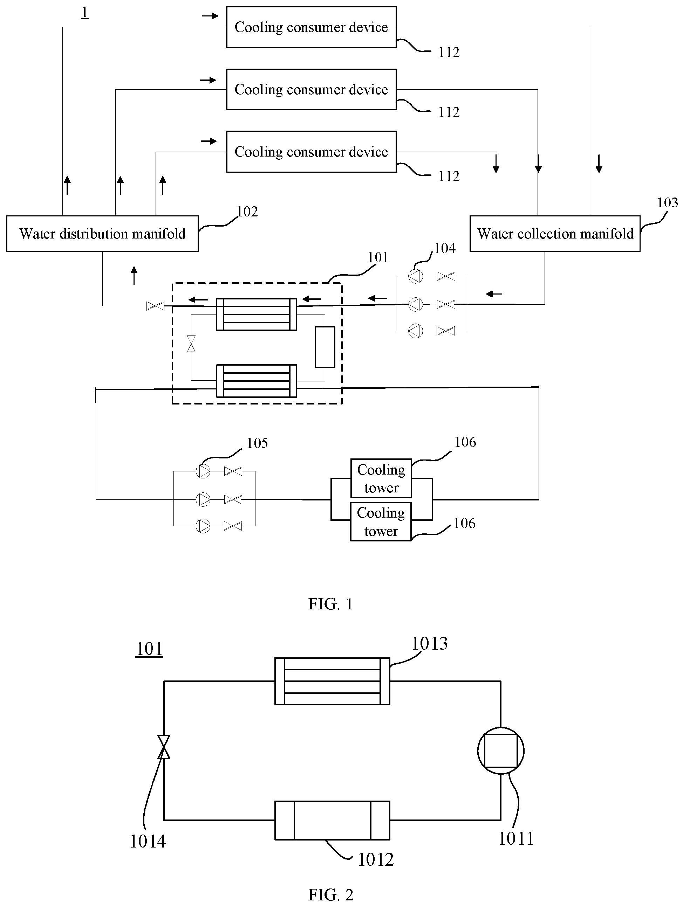

FIG. 1 is a structure diagram of a central air-conditioning system according to some examples.

In some examples, as shown in FIG. 1, the air-conditioning system 1 includes a chiller unit 101 and the chiller unit 101 is configured to cool chilled water flowing through the chiller unit 101. For example, the chiller unit 101 includes multiple chillers and condensers. A cooling water circuit consists of a condenser and the cooling tower, and cooling water is cycling in the cooling water circuit.

FIG. 2 is a structure diagram of a chiller according to some examples.

In some examples, as shown in FIG. 2, the chiller includes a compressor 1011, a condenser 1012, an evaporator 1013, and a throttle device 1014. The compressor 1011, condenser 1012, evaporator 1013, and throttle device 1014 are sequentially connected to form a refrigerant cycling circuit.

The expression "sequential connected" is merely used to explain a sequential relationship of connection between respective members, and other members may also be included between the respective members. For example, a stop valve, etc., may be mounted on a line between the compressor 1011 and the condenser 1012.

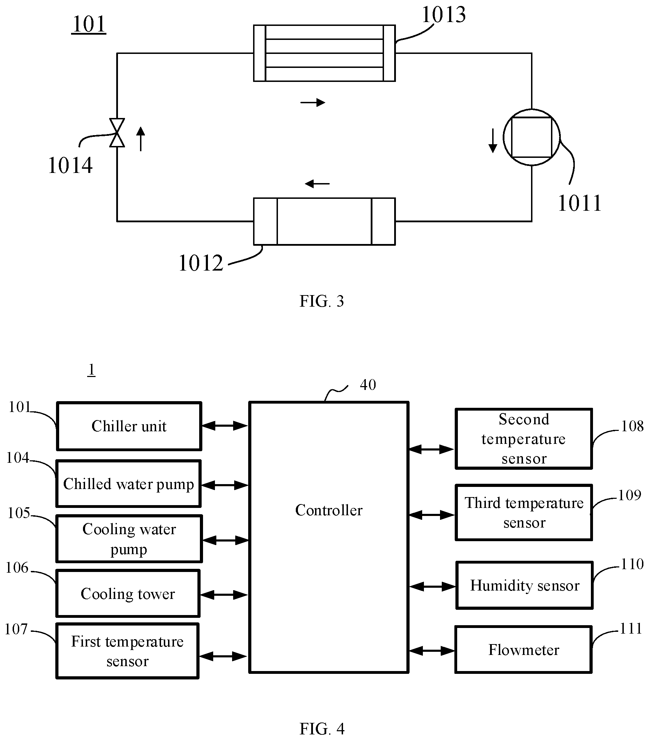

When refrigerating in air-conditioning system 1, as shown in FIG. 3, compressor 1011 compresses the low-temperature and low-pressure gas refrigerant into a high-temperature and high-pressure gas refrigerant and condenser 1012, The high-temperature and high-pressure gaseous refrigerant exchanges heat with the outdoor air flow in a condenser 1012 condenser. The refrigerant released heat, which was carried by the air flow to the outdoor ambient air, and the refrigerant underwent phase transition and was condensed into liquid or gas-liquid two-phase refrigerant. The gaseous refrigerant having high-temperature and high-pressure is heat exchanged with an outdoor air flow in the condenser 1012. The refrigerant releases heat and released heat is carried by an air flow to outdoor ambient air, and the refrigerant thereby undergoes phase transition and is condensed into liquid-state or gas-liquid two-phase-state refrigerant.

Subsequently, the refrigerant is discharged from the condenser 1012 into the throttle device 1014, and the refrigerant is transformed into the refrigerant having low temperature and pressure by reducing temperature and pressure. The refrigerant having low-temperature and low-pressure enters the evaporator 1013, absorbs heat of refrigerant in the evaporator 1013, reduces temperature of the refrigerant in the evaporator 1013, and achieves a refrigeration effect. The refrigerant is then evaporated into the gaseous refrigerant having low temperature and low pressure by means of phase transition, and flows back into the compressor 1011 to realize recycling of the refrigerant.

In some examples, as shown in FIG. 1, the air-conditioning system 1 also includes a water distribution manifold 102. An inlet end of the water distribution manifold 102 is connected to an outlet end of the chiller unit 101. An outlet end of the water distribution manifold 102 is connected to a cooling consumer device 112. The water distribution manifold 102 is configured to distribute the chilled water to the cooling consumer device 112.

For example, outlet ends of the water distribution manifold 102 are connected to multiple cooling consumer devices 112. The water distribution manifold 102 is configured to distribute flow of the chilled water to the multiple cooling consumer devices 112, enabling pressures of chilled water entering the cooling consumer devices 112 are roughly equal.

In some examples, the air-conditioning system 1 further includes a water collection manifold 104 and a chilled water pump 104. An inlet end of the water collection manifold 103 is connected to the cooling consumer device 112. An outlet end of the water collection manifold 103 is connected to the chilled water pump 104 through a chilled water pump valve. The water collection manifold 103 is configured to collect the chilled water.

In some examples, the water distribution manifold 102 and the water collection manifold 103 are connected to the cooling consumer device 112 via a connecting line. For example, the chilled water flows through the cooling consumer device 112 from the outlet end of the water distribution manifold 102 via the connecting line, and subsequently enters the water collection manifold 103 via a line from the inlet end of the water collection manifold 103.

In some examples, a first end of chilled water pump 104 is connected to an inlet end of the chiller unit 101. A second end of the chilled water pump 104 is connected to an outlet end of the water collection manifold 103. The chilled water pump 104 is configured to circulate the chilled water, allowing the chilled water to exchange heat with indoor air to reduce temperature of the indoor air and thereby achieve an effect of cooling.

For example, the chilled water pump 104 includes the chilled water pump valve which is configured to adjust its opening to control the amount of the flow of the chilled water in a line.

In some examples, the chiller unit 101, water distribution manifold 102, water collection manifold 103, and chilled water pump 104 connected in sequence form a chilled water circuit.

In some examples, the air-conditioning system 1 further includes a cooling water pump 105 and a cooling tower 106. A first end of cooling water pump 105 is connected to an outlet end of the chiller unit 101. A second end of the cooling water pump 105 is connected to a first end of the cooling tower 106. The cooling water pump 105 is configured to circulate the cooling water so that after indoor heat is taken away by the chilled water, the chilled water transfers the heat to the cooling water through the chiller unit 101. The cooling water pump 105 is also configured to press the cooling water after temperature rise into the cooling tower 106, so that the cooling water after temperature rise is capable of exchanging heat with the atmosphere and cooling down. After the cooling water is cooled down, the cooling water is returned to the condenser 1012 in the chiller to continue heat exchange.

For example, the cooling water pump 105 includes a cooling water pump valve which is configured to adjust its opening to control the amount of the flow of the cooling water in a line.

In some examples, the chiller unit 101, chilled water pump 104, and cooling tower 106 connected in sequence constitute a cooling water circuit.

In some examples, a second end of the cooling tower 106 is connected to an inlet end of the chiller unit 101. The cooling tower 106 is configured to promote heat exchange between the cooling water and flowing air, so as to release the heat of the cooling water to the air to reduce the temperature of the cooling water, and recycling and circulate the cooling water.

For example, the cooling tower 106 includes at least one cooling tower fan configured to accelerate the flow of surrounding air in order to accelerate reduction for cooling water temperature. The air-conditioning system 1 is able to include one or more cooling towers 106, this is not limited in the present disclosure.

FIG. 4 is a structure diagram of a controller according to some examples.

In some examples, as shown in FIG. 4, the air-conditioning system 1 further includes a first temperature sensor 107 which is disposed close to a position of the cooling tower 106 and touches the outdoor air. The first temperature sensor 107 is configured to detect an outdoor dry-bulb temperature.

In some examples, the air-conditioning system 1 also includes a second temperature sensor 108 which is disposed at the first end of the cooling tower 106. The second temperature sensor 108 is configured to detect the temperature of the cooling water in the case where the cooling water enters the cooling tower 106.

In some examples, the air-conditioning system 1 further includes a third temperature sensor 109 which is disposed at the second end of the cooling tower 106. The third temperature sensor 109 is configured to detect the temperature of the cooling water in a case where the cooling water flow rates out of the cooling tower 106.

In some examples, the air-conditioning system 1 additionally includes a humidity sensor 110 which is disposed close to the position of the cooling tower 106 and touches the outdoor air. The humidity sensor 110 is configured to detect an outdoor relative humidity reading.

In some examples, the air-conditioning system 1 also includes a flowmeter 111 which is disposed at the second end of the cooling tower. The flowmeter 111 is configured to detect a flow rate of the cooling water.

In some examples, as shown in FIG. 4, the air-conditioning system 1 further includes a controller 40. The controller 40 is electrically connected to the chiller unit 101, chilled water pump 104, cooling water pump 105, cooling tower 106, first temperature sensor 107, second temperature sensor 108, third temperature sensor 109, humidity sensor 110, and flowmeter 111. The controller 40 is configured to generate an operation control signal according to an instruction operating code and a timing signal, to instruct the air-conditioning system 1 to execute a control command.

For example, the controller 40 is able to acquire the outdoor dry-bulb temperature detected by the first temperature sensor 107, the first temperature detected by the second temperature sensor 108, the second temperature detected by the third temperature sensor 109, the outdoor relative humidity reading detected by the humidity sensor 110, and the flow of the cooling water detected by the flowmeter 111.

In some examples, the controller 40 is a Central Processing Unit (CPU), a general-purpose processor, a Network Processor (NP), or a Digital Signal Processing (DSP), etc. In addition, the controller 40 is able to be configured to control operation of respective members in the air-conditioning system 1, enabling the respective members of the air-conditioning system 1 to operate to achieve respective predetermined functions of the air-conditioning system 1.

Some examples of the present disclosure also provide a control method for an air-conditioning system that can be applied to the air-conditioning system in any of the examples and is executed by the controller of the air-conditioning system.

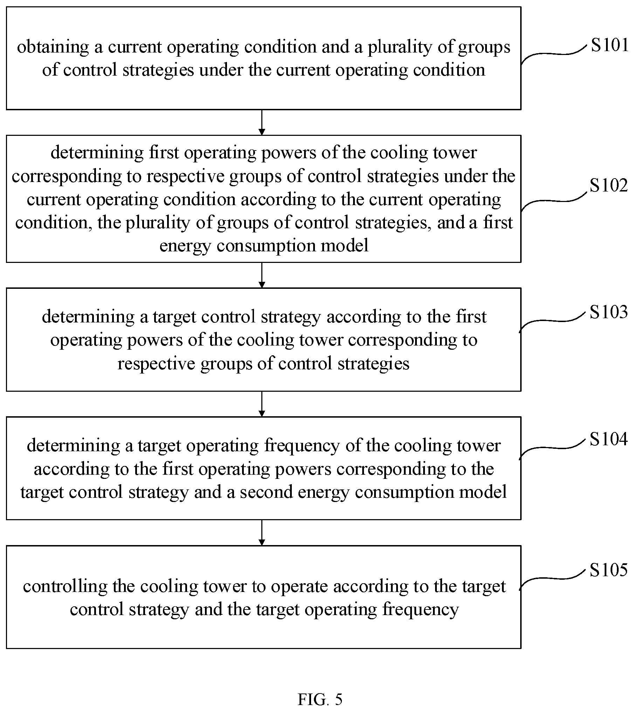

FIG. 5 is a flow chart of a control method for the central air-conditioning system according to some examples. The control method is elaborated below in conjunction with FIG. 5.

As shown in FIG. 5, the control method of air-conditioning system includes Steps 101-105.

Step 101 is obtaining a current operating condition of a cooling tower 106 and a plurality of groups of control strategies under the current operating condition.

For example, a current outdoor dry-bulb temperature and a current outdoor relative humidity reading are able to be used to determine the current operating condition of the cooling tower 106. A control strategy includes a designed cooling water temperature difference, a designed cooling water flow rate, and a first approach degree. Under the current operating condition, through different combinations of the designed cooling water temperature difference, the designed cooling water flow rate, and the first approach degree, the plurality of groups of control strategies are able to be obtained.

Step 102 is determining first operating powers of the cooling tower corresponding to respective groups of control strategies under the current operating condition according to the current operating condition, the plurality of groups of control strategies, and a first energy consumption model.

The first energy consumption model is configured to represent a relationship between a first operating power and a control strategy of the cooling tower.

For example, under the current operating condition, a current wet-bulb temperature is able to be determined according to the current outdoor dry-bulb temperature detected by the first temperature sensor and the current outdoor relative humidity reading detected by the humidity sensor. The current wet-bulb temperature, a plurality of groups of designed cooling water temperature differences, designed cooling water flow rates, first approach degrees in the plurality of groups of control strategies, and a rated operating power corresponding to the current operating condition are input into the first energy consumption model for calculation, so as to obtain the first operating powers corresponding to respective control strategies.

For example, the current wet-bulb temperature, current outdoor dry-bulb temperature, and current outdoor relative humidity reading meet the following formula:

$$T_{wb} = T \cdot arctan[0.151977(RH + 8.313659)^{0.50}] + arctan(T + RH) - arctan(RH - 1.676331) + 0.00391838 \cdot RH^{1.5} \cdot arctan(0.023101RH) - 4.686035 \quad (1) \tag{1}$$

In formula (1), $T_{wb}$ represents the current wet-bulb temperature. $T$ represents the current outdoor dry-bulb temperature. $RH$ represents the current outdoor relative humidity reading.

In some examples, an acquisition method for the first energy consumption model includes steps 201-204.

Step 201 is obtaining pieces of historical data information of the cooling tower 106 under a plurality of groups of historical operating conditions within a predetermined period, along with historical operating powers, historical operating frequencies, and rated operating powers corresponding to the pieces of historical data information.

For example, each piece of historical data information under a historical operating condition includes a historical wet-bulb temperature, a historical control strategy, along with a predetermined wet-bulb temperature, predetermined cooling water temperature difference, predetermined cooling water flow rate, and predetermined approach degree all corresponding to the historical operating condition.

For example, the historical control strategy includes a historical cooling water temperature difference, a historical cooling water flow rate, and a historical approach degree. The historical wet-bulb temperature is determined through a historical outdoor dry-bulb temperature and a historical outdoor relative humidity reading both in the historical operating condition.

A wet-bulb temperature refers to a temperature of the surrounding air in a case where steam evaporates from a target surface. Under the historical operating condition, the historical wet-bulb temperature is able to be calculated according to the historical outdoor dry-bulb temperature and the historical outdoor relative humidity reading.

In some examples, the predetermined period is one year, or may be determined according to requirements of testers, which is not limited in the present disclosure.

Step 202 is obtaining pieces of first data information from the pieces of historical data information under the plurality of historical operating conditions, by removing a piece of the historical data information of which a historical operating frequency is less than a first predetermined frequency or greater than a second predetermined frequency, or a historical operating power is greater than a first predetermined power and less than a second predetermined power.

The cooling tower 106 may malfunction during an operating process, resulting in abnormal data of its historical operating powers or historical operating frequencies. Therefore, removing a piece of historical data information corresponding to abnormal historical operating frequencies and pieces of historical data information corresponding to abnormal historical operating powers is capable of excluding an interference factor in historical data information. It is thus conducive to improving the accuracy of the first energy consumption model.

For example, the first predetermined frequency may be 30Hz, the second predetermined frequency may be 50Hz, the first predetermined power may be $\overline{P}$-2$\sigma$1, and the second predetermined power may be $\overline{P}$-2$\sigma$1. $\overline{P}$ is an average value of historical operating powers within the predetermined period, $\sigma$1 is a mean deviation of historical operating powers within the predetermined period, and $\overline{P}$ can be obtained by formula (2):

$$\overline{P} = \frac{\sum_{i=1}^{n} P_i}{n} \tag{2}$$

In formula (2), P represents historical operating powers, n represents the amount of first data information in the predetermined period.

$\sigma$1 can be obtained by formula (3):

$$\sigma_1 = \sqrt{\frac{\sum_{i=1}^{n}(P_i - \overline{P})^2}{n}} \qquad (3)$$

In formula (3), $\overline{P}$ represents an average value of the historical operating powers within the predetermined period, n represents the amount of the pieces of first data information within the predetermined period, and $P_i$ represents the $i$th historical operating power.

Step S203 is obtaining pieces of second data information by performing a dimensionless process on the pieces of first data information.

For example, historical operating powers, historical wet-bulb temperatures, historical cooling water temperature differences, historical approach degrees, and historical cooling water flow rates in the pieces of first data information are respectively divided by corresponding rated operating powers, predetermined wet-bulb temperatures, predetermined cooling water temperature differences, predetermined approach degrees, and predetermined cooling water flow rates to obtain the pieces of second data information.

A value of a piece of historical data information in the first data information is generally less than that of predetermined data. Therefore, the data after the dimensionless process is not only more accurate, but also enhances the commonality of a first data model and a second data model.

Step 204 is obtaining the first energy consumption model by means of a fitting regression process on the second data information through a least square method.

For example, performing the fitting regression process on the pieces of second data information through the least square method may determine an approximate function according to a curve derived from the fitting, so as to obtain respective parameters of the first energy consumption model.

In some examples, the first energy consumption model includes:

$$\frac{P}{P_e} = a(\frac{\Delta T}{\Delta T_e})^2 + b(\frac{T_{app}}{T_{app,e}})^2 + c(\frac{T_{wb}}{T_{wb,e}})^2 + d(\frac{m_{cw}}{m_{cw,e}})^2 + e(\frac{\Delta T}{\Delta T_e})(\frac{T_{app}}{T_{app,e}}) +$$
$$r(\frac{\Delta T}{\Delta T_e})(\frac{T_{wb}}{T_{wb,e}}) + g(\frac{\Delta T}{\Delta T_e})(\frac{m_{cw}}{m_{cw,e}}) + h(\frac{T_{app}}{T_{app,e}})(\frac{T_{wb}}{T_{wb,e}}) + i(\frac{T_{app}}{T_{app,e}})(\frac{m_{cw}}{m_{cw,e}}) +$$
$$j(\frac{T_{wb}}{T_{wb,e}})(\frac{m_{cw}}{m_{cw,e}}) + k(\frac{\Delta T}{\Delta T_e}) + l(\frac{T_{app}}{T_{app,e}}) + m(\frac{T_{wb}}{T_{wb,e}}) + n(\frac{m_{cw}}{m_{cw,e}}) + o$$

In the first energy consumption model, P represents a historical operating power, $P_e$ represents a rated operating power, $\Delta T$ represents a historical cooling water temperature difference, $\Delta T_e$ represents a predetermined cooling water temperature difference, $T_{app}$ represents a historical approach degree, $T_{app,e}$ represents a predetermined approach degree, $T_{wb}$ represents historical wet-bulb temperature, $T_{wb,e}$ represents a predetermined wet-bulb temperature, $m_{cw}$ represents a historical cooling water flow rate, $m_{cw,e}$ represents a predetermined cooling water flow rate, and a, b, c, d, e, r, g, h, i, j, k, l, m, n, o represent respective coefficients of the first energy consumption model.

Step 103 is determining a target control strategy according to the first operating powers of the cooling tower corresponding to respective groups of control strategies.

For example, the target control strategy is a control strategy corresponding to the minimum first operating power in the plurality of groups of control strategies. Since different control strategies correspond to different energy consumptions in a same operating condition, the operating parameters of the cooling tower 106 are thus controlled with the control strategy corresponding to the minimum designed power. This is conducive to reducing the energy consumption of the cooling tower 106 during operation and achieving the effect of energy conservation.

Step 104 is determining a target operating frequency of the cooling tower according to the first operating powers corresponding to the target control strategy and a second energy consumption model.

In some examples, an acquisition method for the second energy consumption model includes Step 301.

Step 301 is obtaining a second energy consumption model by first obtaining rated operating frequencies corresponding to the historical operating frequencies of the pieces of second data information within the predetermined period, and then performing a fitting regression process on the historical operating powers, the rated operating powers, and the rated operating frequencies corresponding to the pieces of second data information through the least square method.

In some examples, the second energy consumption model includes:

$$\frac{P}{P_e} = A(\frac{f}{f_e})^2 + B(\frac{f}{f_e}) + C$$

In the second energy consumption model, P represents a historical operating power, $P_e$ represents a rated

operating power, *f* represents a target operating frequency of the cooling tower, $f_e$ represents a rated operating frequency of cooling tower, and A, B, and C represent respective coefficients of the second energy consumption model.

The coefficients of the second energy consumption model are obtained by the controller 40 using the least square method. In this method, a regression process is performed on the historical operating powers, historical operating frequencies, rated operating powers, and rated operating frequencies. A determination method of the coefficients of the second energy consumption model is the same as that of the first energy consumption model, which will not be repeated here.

Step 105 is controlling the cooling tower 106 to operate according to the target control strategy and the target operating frequency.

In the control method of air-conditioning system provided in some examples of the present disclosure, since the energy consumption of the cooling tower 106 is related to an operating condition and a control strategy, in a case where the outdoor dry-bulb temperature and outdoor relative humidity reading change, or in a case where the cooling water temperature differences, cooling water flow rates and approach degrees of the cooling tower change, the energy consumption of the cooling tower may be changed.

In such a case, according to the first energy consumption model, the first operating powers of the cooling tower 106 corresponding to various kind of control strategies under the current operating condition can be obtained by calculation. The above various first operating powers may reflect the amount of the energy consumption of the cooling tower 106 corresponding to each kind of control strategy under the current operating condition.

In various control strategies, the energy consumption of the cooling tower 106 corresponding to the control strategy corresponding to the minimum first operating power is the minimum. Therefore, the control strategy corresponding to the minimum designed power can be taken as a target control strategy and the target operating power is determined according to the minimum first operating power and the second energy consumption model.

Such that, the operation of the cooling tower 106 is controlled according to a target control strategy and a target operating frequency (for example, controlling multiple operating parameters of the cooling tower 106), which is conducive to reducing the energy consumption of the cooling tower 106 under the current operating condition, so as to achieve the effect of energy conservation.

The control method of air-conditioning system in the present disclosure is further explained in detail as the following, combined with a more detailed example.

In some examples, the air-conditioning system 1 includes four cooling towers 106. The control method of air-conditioning system includes Steps 1 to 8.

Step 1 is obtaining pieces of historical data information of four cooling towers in one year and a piece of historical data information includes a historical wet-bulb temperature (e.g., the historical wet-bulb temperature is determined through the historical outdoor dry-bulb temperature and the historical outdoor relative humidity reading), a historical cooling water temperature difference, a historical approach degree, a historical cooling water flow rate, a historical operating frequency, a historical operating power, and a rated operating power (for example, 7.5kw), a predetermined cooling water temperature difference (for example, 5°C), a predetermined cooling water flow rate (for example, 303 m$^3$/h) of each cooling tower corresponding to an operating condition.

The pieces of historical data information include data information of the cooling towers 106 in one year.

Step 2 is obtaining the pieces of first data information by means of a process to the pieces of historical data information in the one year.

For example, the process on the pieces of historical data information in one year includes excluding a part of the pieces of historical data information of the cooling towers 106, in which an abnormal historical operating frequency or an abnormal historical operating power occurs. For example, a piece of historical data information in which the corresponding historical operating frequency is greater than 50Hz or less than 30Hz is excluded, and a piece of historical data information in which the corresponding historical operating power is in a range of ($\overline{P}$-2σ1, $\overline{P}$-2σ1) is excluded.

Step 3 is obtaining the coefficients of the first energy consumption model to obtain the first energy consumption model. This is achieved by means of performing a fitting and regression process on the first data information after conducting a dimensionless process on the first data information which has been processed.

For example, rated operating power ratios and historical operating power ratios of the cooling towers 106 under a plurality of historical operating conditions are roughly presented in positive correlation. In a case where a rated operating power ratio increases, a historical operating power ratio also increases. The rated operating powers and historical operating powers of the cooling towers 106 under a plurality of historical operating conditions are roughly presented in positive correlation. In a case where a rated operating power increases, a historical operating power increases as well.

In some examples, fitting results of the first energy consumption model are shown in Table 1.

Table 1

| a | b | c | d | e | r | g | h |
|---|---|---|---|---|---|---|---|
| 2.0043 | -0.2882 | -12.3333 | 5.2924 | -0.0714 | -1.8483 | -3.1369 | -4.5973 |
| i | i | k | l | m | n | o | $R^2$ |
| 0.8753 | 7.2898 | 0.4759 | 2.8001 | 17.9269 | -7.9639 | -5.2168 | 0.9052 |

In Table 1, $R^2$ is a judgment coefficient, also known as goodness of fit; the closer the value of $R^2$ is to 1, the higher the goodness of fit of the model.

Step 4 is obtaining coefficients of the second energy consumption model to obtain the second energy consumption model. This is achieved by means of performing a fitting and regression process on the historical operating powers, historical operating powers, rated operating powers, and rated operating frequencies of the second data information.

For example, the historical operating powers and historical operating frequencies of the cooling towers 106 under a plurality of historical operating conditions are roughly presented in positive correlation. In a case where a historical operating power ratio increases, a historical operating frequency increases as well.

In step 5, the wet-bulb temperature obtained is 24°C by calculation in accordance with an outdoor dry-bulb temperature (e.g., 27°C). Through setting a plurality of groups of control strategies (including a plurality of groups of different designed cooling water temperature differences, designed cooling water flow rates, and first approach degrees), a plurality of first operating powers of the cooling towers of different control strategies of the cooling towers under the current operating condition is obtained by calculation in accordance with the first energy consumption model.

In some examples, the fitting results of the second energy consumption model are shown in Table 2:

Table 2

| A | B | C | $R^2$ |
|---|---|---|---|
| 2.3311 | -1.9983 | 0.6988 | 0.8597 |

Step 6 is sorting magnitudes of the plurality of first operating powers of different control strategies by energy consumption in accordance with the current operating condition.

For example, total refrigeration energy consumptions of the four cooling towers 106 and the quantity of the control strategies are roughly presented in negative correlation. In a case where the total refrigeration energy consumptions of four cooling towers 106 increase, the quantity of the control strategies decrease.

According to the plurality of first operating powers, the target control strategy is determined. The target control strategy is the control strategy corresponding to the minimum first operating power in respective groups of the control strategies.

Step S7 is determining the target operating frequency corresponding to the target operating power through the second energy consumption model.

In some examples, the target operating frequency and related data are shown in Table 3:

Table 3

| Dry-bulb temperature | Wet-bulb temperature | Target operating power | Operating frequency | Quantity of cooling towers on operation |
|---|---|---|---|---|
| 27 °C | 24°C | 393 kW | 32 Hz | 4 |

Step S8 is controlling the four cooling towers 106 to operate in accordance with the target operating frequency (i.e., 32Hz).

For example, as shown in Table 3, the four cooling towers are capable of being controlled to operate according to a same target control strategy and a same target operating frequency (such as 32 Hz).

The control method of air-conditioning system provided hereinbefore in some examples controls the plurality of cooling towers 106 through the target control strategy and the target operating frequency (such as controlling a plurality of operating parameters of the cooling towers 106). This facilitates decreasing the energy consumption of the cooling towers 106 under the current operating condition, so as to achieve the effect of energy conservation. However, effective determination of whether a load ratio distribution among multiple air-conditioning devices (i.e., chillers 101) in the air-conditioning system 1 is reasonable, whether startup modes corresponding to the multiple air-conditioning devices are reasonable, and whether the energy consumption of the air-conditioning system is the lowest cannot be made.

For such reasons, some examples of the present disclosure provide an alternative air-conditioning system 1. For example, the air-conditioning system may be a chiller system, the air-conditioning device may also be referred to as the water chiller 101.

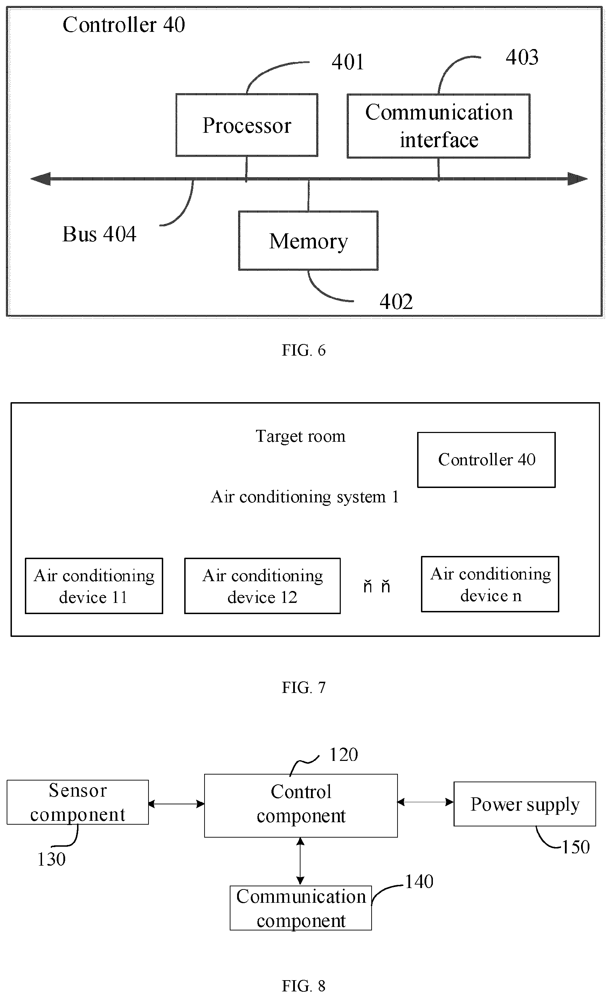

FIG. 7 is a block diagram of another air-conditioning system according to some examples. As shown in FIG. 7, the air-conditioning system 1 includes a plurality of air-conditioning devices and a controller 40. The plurality of air-conditioning devices and the controller 40 are disposed in a target room.

For example, the plurality of air-conditioning devices includes an air-conditioning device 11, an air-conditioning device 12, ..., an air-conditioning device n, etc.

In some examples, the target room may be an office room, a residential room, a room in a large commercial building, which is not limited in the present disclosure.

In some examples, the controller 40 is configured to generate an operation control signal to instruct the air-conditioning system 1 to execute control instructions in accordance with an instruction operating code and a timing signal.

For example, the controller 40 is configured to: obtain a total predicted cooling load value according to outdoor temperatures, outdoor relative humidity readings, and total actual cooling load value under historical times; obtain a total coefficient of performance corresponding to any one of the startup modes (for example, including starting at least one air-conditioning device) of the air-conditioning system according to the total predicted cooling load value and each operating power of the air-conditioning devices; and obtain a target startup mode and the target startup mode serves as a startup mode of the air-conditioning system 1 under a predicting time. For example, the target startup mode is the startup mode of the air-conditioning system 1 corresponding to the maximum total coefficient of performance in total coefficient of performances corresponding to various startup modes.

FIG. 8 is a block diagram of an air-conditioning device according to some examples. As shown FIG. 8, the air-conditioning device includes one or more kinds of a control component 120, a sensor component 130, a communication component 140, and a power supply 150. The sensor component 130, communication component 140, and power supply 150 are all connected to the control component 120.

In some examples, the control component 120 is configured to generate an operation control signal to instruct the air-conditioning device to execute a control instruction according to an instruction operating code and a timing signal.

In some examples, the sensor component 130 includes a temperature sensor and a humidity sensor. The control component 120 is further configured to control the temperature sensor to obtain an outdoor temperature, a cooling water supply temperature, and a cooling water return temperature all under a historical time, and control the humidity sensor to obtain an outdoor relative humidity reading.

In some examples, the communication component 140 is a component configured to communicate with an external device or a server in accordance with respective communicational protocols. For example, the communication component 140 includes a component of Wireless Fidelity (Wi-Fi) technique, a Bluetooth component, or a wired Ethernet component, and at least one of a chip with another network communicational protocol, a component with Near Field Communication (NFC) protocol such as a component of Near Field Communication technique, or an infrared receiver. The communication component 140 is configured to communicate with another device or communication network (such as an Ethernet, a Ratio Access Network (RAN), or a Wireless Local Area Network (WLAN)).

In some examples, the power supply 150 is configured to provide power support to each electrical element of the air-conditioning device under the control of the control component 120.

In some examples, the controller 40 is further configured to: building a coefficient of performance prediction model corresponding to the air-conditioning system 1 before obtaining a total predicted cooling load value, in accordance with chilled water supply temperatures, cooling water return temperatures, cooling load rates, and actual coefficient of performances of the air-conditioning system 1 under historical times. Base on the coefficient of performance prediction model corresponding to the air-conditioning system 1, the chilled water supply temperatures, cooling water return temperatures, cooling load rates are input into the air-conditioning system 1 to obtain a total predicted coefficient of performance. A total actual cooling load value is obtained based on the total predicted coefficient of performance and an operating power of the air-conditioning system. In such a way, an optimized control for the air-conditioning system can be realized to reduce operating energy consumption of the air-conditioning system.

In some examples, the controller 40 is further configured to: after obtaining the total predicted cooling load value of the air-conditioning system 1 under a predicting time, serving the total predicted coefficient of performance of the air-conditioning system 1 as an objective function, determining a load rate distribution value of each air-conditioning device under the predicting time by means of a differential evolution algorithm in accordance with the chilled water supply temperatures, cooling water return temperatures, and the total predicted cooling load value.

The differential evolution algorithm is a population-based evolutionary algorithm. It can simulate processes of cooperation and competition among individuals in a population, including selection, crossover, and mutation operations. The differential evolution algorithm is a mature global optimization method with high robustness and wide applicability.

By using the differential evolution algorithm to determine the load rate distribution value of each air-conditioning device at the predicting time, a target load rate distribution value of each air-conditioning device can be obtained. Thus, the optimized control of the air-conditioning system can be achieved, and the operating energy consumption of the air-conditioning system can be reduced.

In some examples, the controller 40 is further configured to: obtaining a cooling load value of each air-conditioning device according to the load rate distribution value, and obtaining an optimized chilled water supply temperature value of each air-conditioning device in accordance with the specific heat capacity of water, a chilled water flow rate and the cooling water return temperature of each air-conditioning device, and a distributed cooling load value of each air-conditioning device. In such a way, the optimized control of the air-conditioning system can be achieved to reduce the operating energy consumption of the air-conditioning system.

In some examples, the total predicted cooling load value of the air-conditioning system 1 under the predicted time is obtained according to outdoor temperatures, outdoor relative humidity reading readingss, and the total actual cooling load values of the air-conditioning system under historical times, including: outputting the total cooling load value at the current time by inputting an outdoor temperature, an outdoor relative humidity reading, and a total actual cooling load value all at a first historical time, based on a first backpropagation neural network, and obtaining the total predicted cooling load value which is output at the predicting time by inputting an outdoor temperature, an outdoor relative humidity reading, and a total actual cooling load value all at a second historical time, based on a second backpropagation neural network.

Such that, the control method of air-conditioning system in some examples of the present disclosure is able to obtain a total predicted cooling load value of the air-conditioning system of a next time in advance, and a certain amount of time in advance before the arrival of the next time, the water supply temperature and the startup mode of the air-conditioning system are actively adjusted, so as to realize the optimized control of the air-conditioning system and reduce the operating energy consumption of the air-conditioning system.

In some examples, the controller 40 is also configured to: after a startup mode, serve as the startup mode of the air-conditioning system at the predicting time, of the air-conditioning system corresponding to a maximum total coefficient of performance being obtained, obtaining an average cooling load value of the air-conditioning system within the predetermined period before the predicting time; determine whether the chilled water supply temperature is less than a first predetermined temperature in a case where the cooling load rate of the air-conditioning system is less than a predetermined load rate; determine whether the average cooling load value is less than a predetermined scaling factor of a second refrigeration capacity in a case where a chilled water supply temperature value is less than or equal to a first predetermined temperature value; turn on an air-conditioning device corresponding to the second refrigeration capacity and turning off an air-conditioning device corresponding to a first refrigeration capacity in a case where the average cooling load value is greater than the predetermined scaling factor of the second refrigeration capacity; the second refrigeration capacity being less than the first refrigeration capacity; determine whether a second coefficient of performance is greater than or equal to a first coefficient of performance in a case where the average cooling load value is less than or equal to the predetermined scaling factor of the second refrigeration capacity; an air-conditioning device corresponding to the first coefficient of performance being the air-conditioning device corresponding to the first refrigeration capacity and an air-conditioning device corresponding to the second coefficient of performance being the air-conditioning device corresponding to the second refrigeration capacity; turn on the air-conditioning device corresponding to the second coefficient of performance and turning off the air-conditioning device corresponding to the first coefficient of performance in a case where the second coefficient of performance is greater than or equal to the first coefficient of performance; and turn on the air-conditioning device corresponding to the first coefficient of performance and turning off the air-conditioning device corresponding to the second coefficient of performance in a case where the second coefficient of performance is less than the first coefficient of performance. Such that, the optimized control of the air-conditioning system can be realized and the operating energy consumption of the air-conditioning system can be reduced.

In some examples, the controller 40 is further configured to: determine whether the chilled water supply temperature value is greater than or equal to a second predetermined temperature value; determine whether the average cooling load value is less than a predetermined scaling factor of the first refrigeration capacity in a case where the chilled water supply temperature value is greater than or equal to the second predetermined temperature value; the second predetermined temperature value being greater than the first predetermined temperature value; turn on an air-conditioning device corresponding to the second refrigeration capacity in a case where the average cooling load value is greater than the predetermined scaling factor of the first refrigeration capacity; determine whether the second coefficient of performance is greater than or equal to the first coefficient of performance in a case where the average cooling load value is less than or equal to the predetermined scaling factor of the first refrigeration capacity; turn on an air-conditioning device corresponding to the second coefficient of performance in a case where the second coefficient of performance is greater than or equal to the first coefficient of performance; turn on an air-conditioning device corresponding to the first coefficient of performance in a case where the second coefficient of performance is less than the first coefficient of performance.

In a case where the air-conditioning system is provided with numerous air-conditioning devices, the air-conditioning devices are not necessary to operate simultaneously. In the case, the controller 40 is required to control the air-conditioning devices to operate alternatively to realize optimal distribution of cooling load rate.

However, an air-conditioning device in processes of startup and shutdown needs to consume more energy and frequent startup and shutdown may cause waste of energy consumption. Therefore, in a case where the air condition devices are numerous, by reducing the number of the air-conditioning devices, utilization efficiency of an energy source is improved and the control for the air-conditioning system is optimized.

In some examples, the controller 40 is further configured to: maintain the target startup mode, serving as the startup mode of the air-conditioning system at the predetermined time, of the air-conditioning system corresponding to the maximum total coefficient of performance in a case where the chilled water supply temperature value is greater than the first predetermined temperature value and less than the second predetermined temperature value.

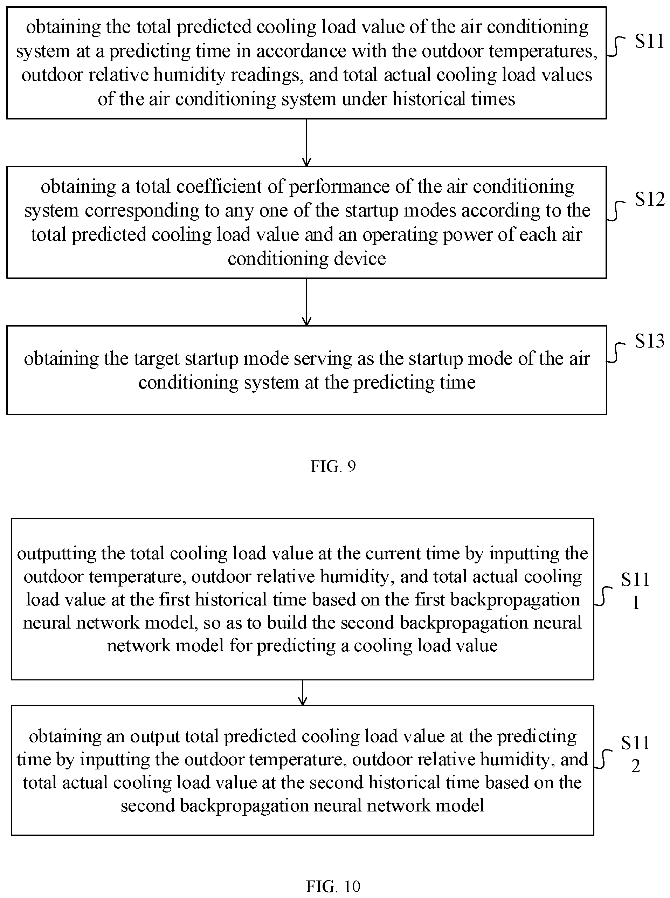

FIG. 9 is a flow chart of another control method of the air-conditioning system according to some examples.

Based on another air-conditioning system 1, as shown in FIG. 9, another control method of the air-conditioning system is further provided in some examples of the present disclosure, the method including steps 11 to 13.

Step 11 is obtaining the total predicted cooling load value of the air-conditioning system at a predicting time in accordance with the outdoor temperatures, outdoor relative humidity readings, and total actual cooling load values of the air-conditioning system under historical times.

In some examples, the outdoor temperatures are obtained with a temperature sensor and the outdoor relative humidity readings are obtained with a humidity sensor.

In some examples, the total predicted cooling load value of the air-conditioning system at the predicting time is able to be obtained by means of calculation and prediction based on a Back Propagation (BP) neural network model.

The back propagation neural network model has a structure of the BP neural network. The BP neural network is a multilayer feedforward neural network trained according to an error back propagation algorithm. BP neural network model is a kind of model aiming to nonlinear, non-periodic, irregular, non-structural or semi-structural data modeling, which is often used and has a significant effect. The BP neural network model can be built in conjunction with data mining, and has characteristics of time series. By means of prediction for the cooling load value of the air-conditioning system through the BP neural network, improvement of efficiency, accuracy, and reliability of the prediction is facilitated.

Step 12 is obtaining a total coefficient of performance of the air-conditioning system corresponding to any one of the startup modes according to the total predicted cooling load value and an operating power of each air-conditioning device.

A startup mode includes startup of at least one of the air-conditioning devices. For example, in a case where the air-conditioning system 1 includes an air-conditioning device 11, an air-conditioning device 12, and an air-conditioning device 13, the startup mode includes startup of any one, any two, or all of the air-conditioning device 11, air-conditioning device 12, and air-conditioning device 13.

In some examples, formula (4) can be used to obtain the total coefficient of performance of the air-conditioning system corresponding to any one of the startup modes.

$$COP = \frac{Q_{pre}}{\sum_i^n P_i} = \frac{Q_{pre}}{\sum_i^n \frac{Q_i}{COP_i}} \qquad (4)$$

In formula (4), $COP$ represents the total coefficient of performance of the air-conditioning system, $Q_{pre}$ represents the total predicted cooling load value, $P_i$ represents the operating power of the $i^{th}$ air-conditioning device, $Q_i$ represents the cooling load value undergone by the $i^{th}$ air-conditioning device, $COP_i$ represents the coefficient of performance of the $i^{th}$ air-conditioning device, n represents the quantity of air-conditioning devices turned on.

Step 13 is obtaining the target startup mode serving as the startup mode of the air-conditioning system at the predicting time.

In the air-conditioning system, the target startup mode is the startup mode of the air-conditioning system corresponding to the maximum total coefficient of performance in total coefficient of performances corresponding to the various startup mode.

In an air-conditioning system, Coefficient of Performance (COP) is also called coefficient of performance of refrigeration referring to the ratio of the cooling capacity of the air-conditioning system to the power consumed under a certain operating condition. Namely, the cooling capacity obtained by consuming unit power. Therefore, COP represents the energy utilization efficiency of the air-conditioning system. The larger the COP of the air-conditioning system is, the higher the energy utilization efficiency of the air-conditioning system will be, and conversely, the smaller the COP of the air-conditioning system is, the lower the energy utilization efficiency of the air-conditioning system will be. Therefore, the target startup mode of the air-conditioning system corresponding to the maximum total coefficient of performance is served as the startup mode of the air-conditioning system at the predicting time. Such that the optimized control of the air-conditioning system is realized and the operating energy consumption of the air-conditioning system is reduced.

In the above examples, the controller 40 obtains the total predicted cooling load value of the air-conditioning system at the predicting time according to the outdoor temperatures, outdoor relative humidity readings, and total actual cooling load values of the air-conditioning system under the historical times. Then, the controller 40 obtains the total coefficient of performance of the air-conditioning system corresponding to any one of the startup modes according to the total predicted cooling load value and the operating power of each air-conditioning device. Since the larger the coefficient of performance is, the more the conservation of power is, the target startup mode of the air-conditioning system corresponding to the maximum total coefficient of performance serves as the startup mode of the air-conditioning system at the predicting time, thereby the optimized control of the air-conditioning system can be realized to reduce the operating energy consumption of the air-conditioning system.

FIG. 10 is a flow chart of yet another control method of the air-conditioning system according to some examples.

In some examples, as shown in FIG. 10, step 11 includes steps 111 and 112.

Step 111 is outputting the total cooling load value at the current time by inputting the outdoor temperature, outdoor relative humidity reading, and total actual cooling load value at the first historical time based on the first backpropagation neural network model, so as to build the second backpropagation neural network model for predicting a cooling load value.

In some examples, training for the backpropagation neural network model is performed to build the second backpropagation neural network model for predicting the cooling load value through a plurality of parameters such as the outdoor temperature, outdoor relative humidity reading, total actual cooling load value at the first historical time, and the total cooling load value at the current time.

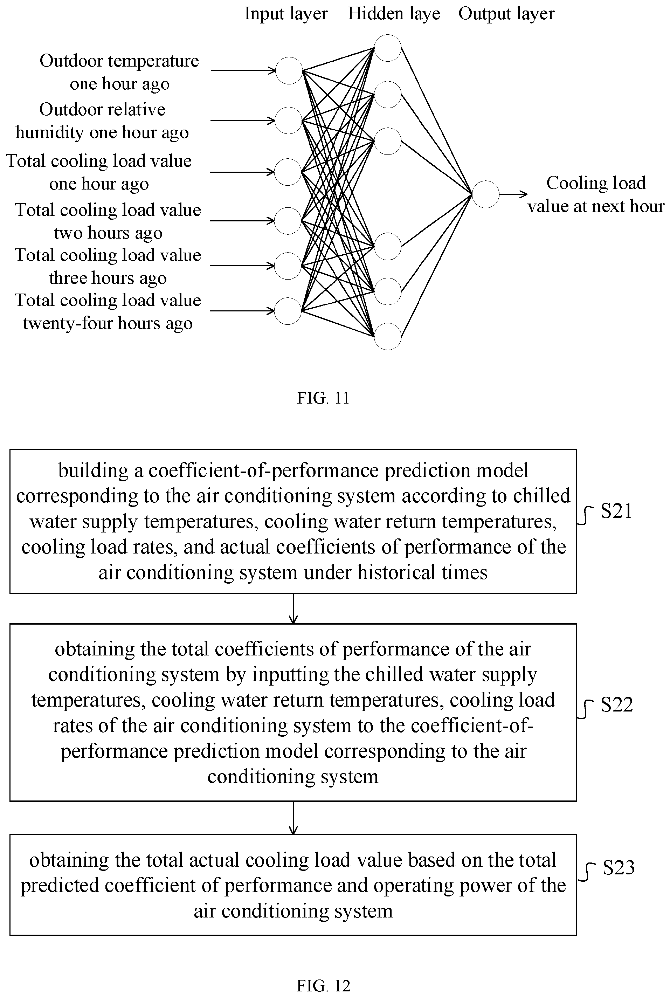

FIG. 11 is a structure diagram of a neural network for predicting the cooling load value according to some examples. The backpropagation neural network model is as shown in FIG. 11.

For example, referring to FIG. 11, an outdoor temperature one hour before the current time, an outdoor relative humidity reading one hour before the current time, a total cooling load value corresponding to a time twenty-four hours before the current time, a total actual cooling load value three hours before the current time, a total actual cooling load value two hours before the current time, and a total actual cooling load value one hour before the current time are served as input and input into input layers of a BP neural network model which has six input layers. The quantity of nodes of hidden layers is fourteen. Output layers are used for training a target value which is the total cooling load value of the air-conditioning system at the current time, so that the second backpropagation neural network model for predicting the cooling load value can be trained through the above data.

Step 112 is obtaining an output total predicted cooling load value at the predicting time by inputting the outdoor temperature, outdoor relative humidity reading, and total actual cooling load value at the second historical time based on the second backpropagation neural network model.

In some examples, based on the built second backpropagation neural network model, serving a next time of the current time as the predicting time, the total predicted cooling load value at the predicting time is obtained.

For example, an outdoor temperature one hour before the predicting time, an outdoor relative humidity reading one hour before the predicting time, a total cooling load value twenty-four hours before the predicting time, a total cooling load value three hours before the predicting time, a total cooling load value two hours before the predicting time, and a total cooling load value one hour before the predicting time are served as input and input into input layers of a BP neural network model which has six input layers. The quantity of nodes of hidden layers is fourteen. Output layers are used for training a target value which is the total predicted cooling load value of the air-conditioning system at the predicting time.

Generally, related techniques obtain the most energy-conserving cooling load rate of each air-conditioning device by means of calculation with a cooling load value of the air-conditioning system which is gathered in real time. Then, operating parameters of each air-conditioning device are adjusted in accordance with the most energy-conserving cooling load rate of each air-conditioning device, thereby realizing the optimized control of the air-conditioning system.

However, implementation of such load distribution requires to adjust a water supply temperature and the startup mode for each air-conditioning device, and such adjustment requires to last a certain period of time to accomplish. For example, implementation of the process in a way that the target load distribution obtained by calculation based on the current time may cost 15 to 30 minutes to enable the air-conditioning system to be adjusted to an energy-conservation operating state. Nonetheless, after 15 to 30 minutes, the cooling load value might have been changed.

For that reason, the control method of air-conditioning system provided in some examples of the present disclosure is able to obtain a total predicted cooling load value of the air-conditioning system of a next time in advance, so as to actively adjust and control the water supply temperature and the startup mode of the air-conditioning system ahead of a certain period of time, thereby realizing the optimized control of the air-conditioning system to reduce the operating energy consumption.

FIG. 12 is a flow chart of yet another control method of the air-conditioning system according to some examples.

In some examples, as shown in FIG. 12, the control method of air-conditioning system also includes steps 21 to 23 before obtaining the total predicted cooling load value of the air-conditioning system at the predicting time.

Step 21 is building a coefficient-of-performance prediction model corresponding to the air-conditioning system according to chilled water supply temperatures, cooling water return temperatures, cooling load rates, and actual coefficients of performance of the air-conditioning system under historical times.

In some examples, the coefficient-of-performance prediction model corresponding to the air-conditioning system is able to be built by using formula (5).

$$COP = A \cdot PLR^2 + B \cdot T_{chw,s}^2 + C \cdot T_{chw,r}^2 + D \cdot PLR \cdot T_{chw,s} + E \cdot PLR \cdot T_{chw,r} + F \cdot T_{chw,s} + G \cdot PLR + H \cdot T_{chw,s} + I \cdot T_{chw,r} + J \tag{5}$$

In formula (5), PLR represents the load rate of the air-conditioning system, $T_{chw,s}$ represents the chilled water supply temperature in Celsius (°C), $T_{cw,r}$ represents the cooling water return temperature in Celsius (°C), and A, B, C, D, E, F, G, H, I, and J represent identification coefficients of a chiller unit model.

By inputting the chilled water supply temperatures, cooling water return temperatures, cooling load rates, and actual coefficients of performance, the identification coefficients (A, B, C, D, E, F, G, H, I, and J) of the chiller unit model in formula (5) are obtained, thereby building the coefficient-of-performance prediction model corresponding to the air-conditioning system. The coefficient-of-performance prediction model is trained by using a plenty of historical data.

In some examples, the coefficient-of-performance prediction model corresponding to each air-conditioning device is built in accordance with the chilled water supply temperatures, cooling water return temperatures, cooling load rates, and actual coefficients of performance of each air-conditioning device under historical times.

Step 22 is obtaining the total coefficients of performance of the air-conditioning system by inputting the chilled water supply temperatures, cooling water return temperatures, cooling load rates of the air-conditioning system to the coefficient-of-performance prediction model corresponding to the air-conditioning system.

In some examples, formula (5) is able to be used, inputting the chilled water supply temperature, cooling water return temperature, cooling load rate, and actual coefficient of performance of the air-conditioning system at the predicting time, thereby obtaining the total predicted coefficient of performance of the air-conditioning system at the predicting time.

In some examples, based on the coefficient-of-performance prediction model corresponding to each air-conditioning device, inputting the chilled water supply temperature, cooling water return temperature, cooling load rate of each air-conditioning device, the predicted coefficient of performance of each air-conditioning device is obtained, thereby obtaining the total predicted coefficient of performance of the air-conditioning system.

Step 23 is obtaining the total actual cooling load value based on the total predicted coefficient of performance and operating power of the air-conditioning system.

In some examples, the total actual cooling load value of the air-conditioning system is obtained based on the predicted coefficient of performance and operating power corresponding to each air-conditioning device.

For example, through formula (6), the total actual cooling load value of the air-conditioning system is able to be obtained:

$$Q = \sum_{i=1}^{n} COP_i \cdot P_i \tag{6}$$

In formula (6), Q represents the total actual cooling load value of a building in kW, P represents the actual power of each air-conditioning system in kW, the subscript i represents the $i^{th}$ air-conditioning system, and n represents the total of air-conditioning systems.

In some of the above examples, the coefficient-of-performance prediction model corresponding to the air-conditioning system is able to be built in accordance with the chilled water supply temperature, cooling water return temperatures, cooling load rates, and actual coefficients of performance of the air-conditioning system under historical times, so as to obtain the total predicted coefficient of performance of the air-conditioning system using the coefficient-of-performance predication model, thereby obtaining the total actual cooling load rate value. According to the total actual cooling load value, the cooling load value of each air-conditioning system is divided, thereby realizing the optimized control of the air-conditioning system and reducing the operating energy consumption of the air-conditioning system.

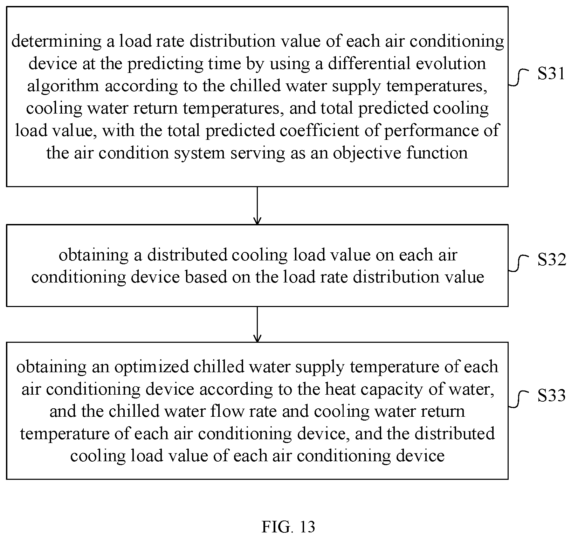

FIG. 13 is a flow chart of yet another control method of the air-conditioning system according to some examples.

In some examples, as shown in FIG. 13, after the total predicted cooling load value of the air-conditioning system at the predicting time being obtained, the control method of air-conditioning system further includes steps 31 to 33.

Step 31 is determining a load rate distribution value of each air-conditioning device at the predicting time by using a differential evolution algorithm according to the chilled water supply temperatures, cooling water return temperatures, and total predicted cooling load value, with the total predicted coefficient of performance of the air condition system serving as an objective function.

The differential evolution algorithm is a population-based evolutionary algorithm, which is able to simulate the process of individual cooperation and competition in the population, including selection, crossover and mutation operations. The differential evolution algorithm is a mature global optimization method with high robustness and wide applicability.

A target load rate distribution value of each air-conditioning device is able to be obtained by means of the differential evolution algorithm to determine the load rate distribution value of each air-conditioning device at the predicting time, so as to realize the optimized control of the air-conditioning system and reduce the operating energy consumption of the air-conditioning system.

In some examples, formula (7) is able to be used to obtain the total actual cooling load value of the air-conditioning system:

$$COP_{max} = \sum_{i=1}^{n} COP_i \qquad (7)$$

In formula (7), $COP_{max}$ represents a maximum coefficient of performance.

In some examples, formula (8) is able to be served as a constraint condition to obtain the target load rate distribution value corresponding to each air-conditioning device.

$$\begin{cases} 0 \leq \frac{PLR_i \cdot Q_{de,i}}{Q} \leq 1 \\ \sum_{i=1}^{n} \frac{PLR_i \cdot Q_{de,i}}{Q} = 1 \\ PLR_i \leq 1.1 \end{cases} \qquad (8)$$

In formula (8), $Q_{de}$ represents a rated refrigeration capacity on a nameplate of a chiller unit in kW.

According to formula (8), the sum of cooling load values distributed to each air-conditioning device is equal to the total cooling load value of the plurality of air-conditioning devices.

In some examples, the differential evolution algorithm includes steps 311 to 316.

Step 311 is performing an operation of initializing population, including: serving each air-conditioning device in the air-conditioning system as a separate individual of the population and randomly initializing parameter vectors in D dimension, where the quantity of the parameter vectors is NP, referring to formula (9) and (10). For example, the quantity of the population is 200.

$$\{X_i(0)|x_{i,j}^L \leq x_{i,j}(0) \leq x_{i,j}^U; i = 1, 2, \dots, NP; j = 1, 2, \dots, D\} \qquad (9)$$

$$x_{i,j}(0) = x_{i,j}^L + rand(0, 1) \cdot \left(x_{i,j}^U - x_{i,j}^L\right) \qquad (10)$$

In formula (9) and formula (10), $X_i(0)$ represents the $i$th individual, $j$ represents the $j$th dimension, rand(0, 1) represents a random number falling in the range of [0,1], and $x_{i,j}^L$ and $x_{i,j}^U$ are a lower limit and an upper limit of the $j$th dimension, respectively.

Step 312 is performing fitness calculation, including: calculating a fitness value of each individual in an initial population and serving the total predicted coefficient of performance of the air-conditioning system as the objective function, with an objective function value taken as the fitness value of the individual.

Step 313 is executing determination of a termination condition, including: whether a maximum iteration is reached or whether a fitness function reaches an expected value. In a case where the maximum iteration is reached or the fitness function reaches the expected value, evolution is terminated, outputting an obtained optimal individual as an objective solution. In a case where the maximum iteration is not reached and the fitness function not reaches the expected value, step 314 is performed.

Step 314 is performing an operation of population mutation, including: randomly selecting two different individuals in the population and after scaling a vector difference of the different individuals, performing vector synthesis on a scaled vector difference with an individual to be mutated.

For example, Formula (11) is able be used to perform the vector synthesis on the scaled vector difference with the individual to be mutated after scaling the vector difference of the different individuals.

$$V_i(g + 1) = X_{r1}(g) + F\left(X_{r2}(g) - X_{r3}(g)\right) \qquad (11)$$

In formula (11), r1, $r2$, and r3 represent three random numbers whose values are in a range of [1, NP], F represents a scaling factor, F represents a constant, and g represents $g$th generation.

Step 315 is performing an operation of population crossover, including: generating a random number n (for example, n is any value from 0 to 1), then using formula (12) to complete the operation of population crossover.

$$U_{i,j}(g + 1) = \begin{cases} V_{i,j}(g + 1), & n \leq CR \\ X_{i,j}(g), & n > CR \text{ or } n < CR \end{cases} \qquad (12)$$

In formula (12), CR represents a crossover probability.

The crossover of population is to generate diverse offspring vectors, enhancing diversity of the population, and promoting a structured difference in the population.

Step 316 is performing an operation of target population selection, including: comparing a crossover vector with an original vector, and selecting a better individual among them as a new individual.

For example, the operation of target population selection is performed through formula (13).

$$X_i(g + 1) = \begin{cases} U_i(g + 1), & f(U_i(g + 1)) \leq f(X_i(g)) \\ X_i(g), & f(U_i(g + 1)) > f(X_i(g)) \end{cases} \tag{13}$$

Step 32 is obtaining a distributed cooling load value on each air-conditioning device based on the load rate distribution value.

For example, in a case where the predicting time is the next time and the predicted cooling load value at the predicting time is 1406 kw, given that there are two air-conditioning devices whose rated cooling value are 1406 kw, optimal cooling load rate distribution values at the next time are cooling load rates of which the two air-conditioning devices respectively undergo 50% cooling load rate. Namely, the distributed cooling values of the two air-conditioning devices are 703 kw, respectively.

Step 33 is obtaining an optimized chilled water supply temperature of each air-conditioning device according to the heat capacity of water, and the chilled water flow rate and cooling water return temperature of each air-conditioning device, and the distributed cooling load value of each air-conditioning device.

In some examples, an optimized chilled water supply temperature value for each air-conditioning device is able be obtained by using formula (14).

$$t_{s,i} = t_r - \frac{Q_i}{c \cdot m_i} \tag{14}$$

In formula (14), c represents the heat capacity of water in kJ/ (kg·°C), $m_i$ represents the chilled water flow rate of the $i^{th}$ chiller in m$^3$/s, $t_r$ represents a water return temperature of a chilled water main line in °C, and $t_{s,i}$ represents the chilled water supply temperature of the $i^{th}$ chiller in °C.

The chilled water supply temperature is related to the power consumption of the air-conditioning system. The higher the chilled water supply temperature is, the smaller the power consumption of the air-conditioning system.

The control method of air-conditioning system provided in some examples of the present disclosure is able to obtain the target load rate distribution value of each air-conditioning device through the differential evolution algorithm to determine the load rate distribution value of each air-conditioning device at the predicting time. Subsequently, in accordance with the load rate distribution value, the distributed target cooling load value of each air-conditioning device is obtained, then the optimized chilled water supply temperature value of each air-conditioning device is obtained, and the optimized chilled water supply temperature value is set to the chilled water supply temperature value at the next time, so as to realize the optimized control of the air-conditioning system, thereby reducing the operating energy consumption of the air-conditioning system.

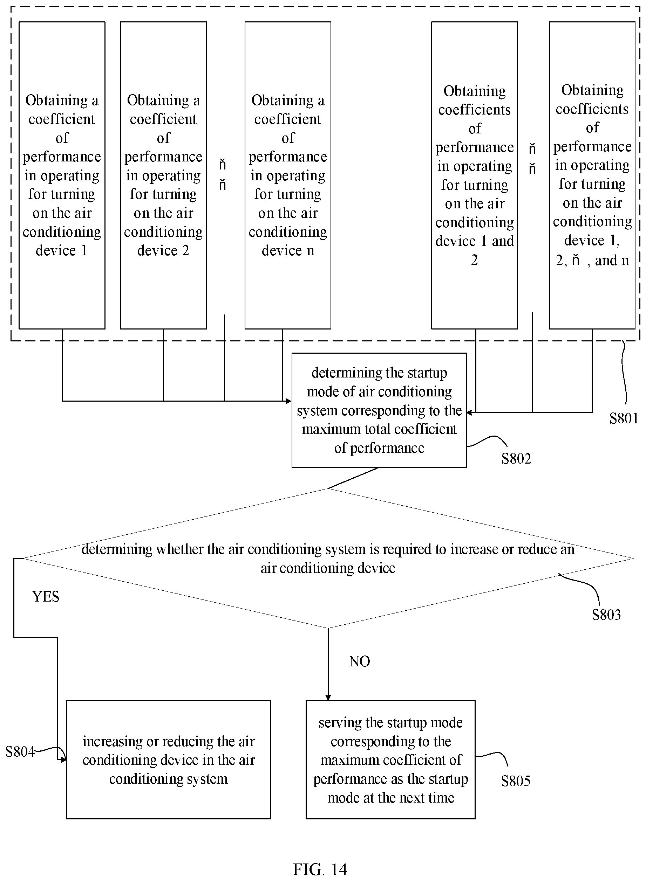

FIG. 14 is a flow chart of yet another control method of the air-conditioning system according to some examples.

In some examples, as shown in FIG. 14, the control method of air-conditioning device also includes steps 801 to 805.

Step 801 is obtaining the total coefficient of performance corresponding of the air-conditioning system corresponding to any one of the startup modes.

For example, the step of obtaining the total coefficient of performance corresponding of the air-conditioning system corresponding to any one of the startup modes includes obtaining a coefficient of performance of a single air-conditioning device in operating and obtaining coefficients of performance of at least two air-conditioning devices in combined operating.

Step 802 is determining the startup mode of air-conditioning system corresponding to the maximum total coefficient of performance.

Step 803 is determining whether the air-conditioning system is required to increase or reduce an air-conditioning device, in a case where the air-conditioning system is required to increase or reduce an air-conditioning device, executing step 804, and in a case where the air-conditioning system is not required to increase or reduce the air-conditioning device, executing step 805.

Step 804 is increasing or reducing the air-conditioning device in the air-conditioning system.

For example, increasement or reduction of an air-conditioning device in the air-conditioning system is able to be realized by increasing or reducing the air-conditioning device in the air-conditioning system to reduce frequent startup and shutdown of the air-conditioning device in the air-conditioning system, thereby conducing to prolonging the service life of the air-conditioning system.

Step 805, serving the startup mode corresponding to the maximum coefficient of performance as the startup mode at the next time.

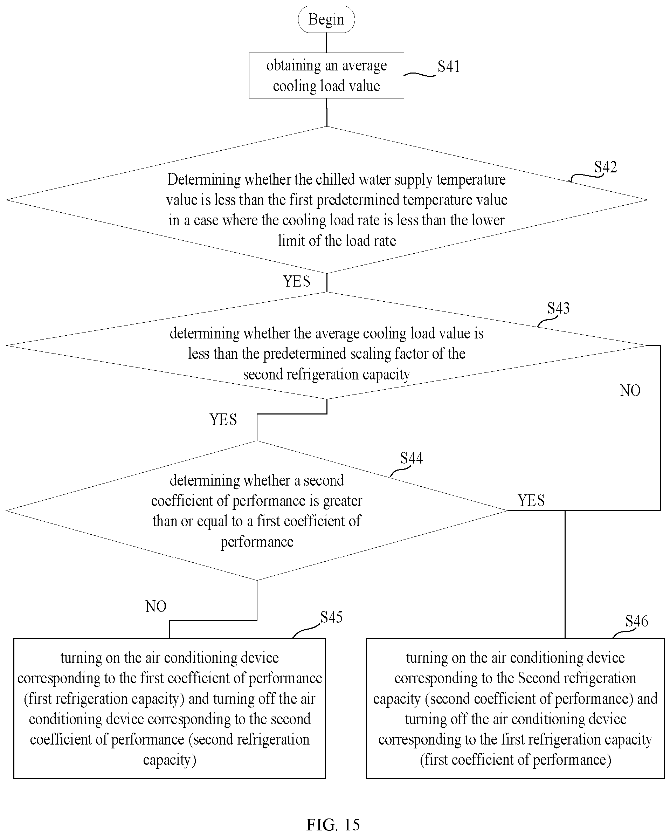

FIG. 15 is a flow chart of yet another control method of the air-conditioning system according to some examples. As shown in FIG. 15, the step of reducing the air-conditioning device in the air-conditioning system includes steps 41 to 46.

Step 41 is obtaining an average cooling load value of the air-conditioning system within the predetermined period before the predicting time.

Step 42 is determining whether the chilled water supply temperature value is less than or equal to the first predetermined temperature value in a case where the cooling load rate of the air-conditioning system is less than the predetermined load rate.

For example, the predetermined load rate is the lower limit of the operation of the air-conditioning system.

Step 43 is determining whether the average cooling load value is less than the predetermined scaling factor of the second refrigeration capacity; in a case where the average cooling load value is less than the predetermined scaling factor of the second refrigeration capacity, executing step 44; and in a case where the average cooling load value is not less than the predetermined scaling factor of the second refrigeration capacity, executing step 46.

For example, the predetermined scaling factor is set to 1.1.

Step 44 is determining whether a second coefficient of performance is greater than or equal to a first coefficient of performance; in a case where the second coefficient of performance is greater than or equal to the first coefficient of performance, executing step 46; and in a case where the second coefficient of performance is not greater than or equal to the first coefficient of performance, executing step 45.

The second refrigeration capacity is less than the first refrigeration capacity. The air-conditioning device corresponding to the first coefficient of performance is the air-conditioning device corresponding to the first refrigeration capacity. The air-conditioning device corresponding to the second coefficient of performance is the air-conditioning device corresponding to the second refrigeration capacity.

Step 45 is turning on the air-conditioning device corresponding to the first coefficient of performance and turning off the air-conditioning device corresponding to the second coefficient of performance.

Step 46 is turning on the air-conditioning device corresponding to the second coefficient of performance and turning off the air-conditioning device corresponding to the first coefficient of performance.

In the case where the air-conditioning system is provided with numerous air-conditioning devices, the air-conditioning devices are not required to be operating simultaneously. In such a case, the controller 40 is require to control the air-conditioning systems to operate alternatively to realize the optimal distribution of cooling load rate.

However, the air-conditioning devices are required to consume more energy in the process of startup and shutdown. Therefore, in a case where the air condition devices are numerous, by reducing the number of the air-conditioning devices, utilization efficiency of the energy source is improved and the control for the air-conditioning system is optimized.

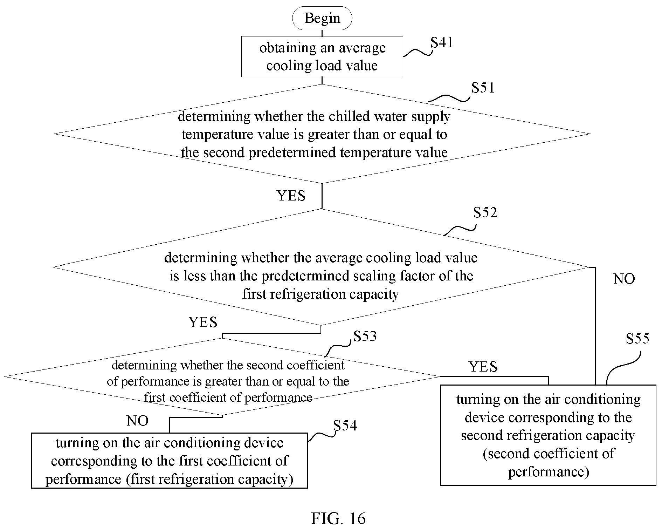

FIG. 16 is a flow chart of yet another control method of the air-conditioning system according to some examples. As shown in FIG. 16, the step of increasing an air-conditioning device in the air-conditioning system includes step 41 and steps 51 to 55.

Step 41 is obtaining an average cooling load value of the air-conditioning system within the predetermined period before the predicting time.

Step 51 is determining whether the chilled water supply temperature value is greater than or equal to the second predetermined temperature value.

Step 52 is determining whether the average cooling load value is less than the predetermined scaling factor of the first refrigeration capacity in a case where the chilled water supply temperature value is greater than or equal to the second predetermined temperature value; in a case where the average cooling load value is less than the predetermined scaling factor of the first refrigeration capacity, executing step 53; in a case where the average cooling load value is not less than the predetermined scaling factor of the first refrigeration capacity, executing step 55.

The second predetermined temperature value is greater than the first predetermined temperature value. For example, the second predetermined temperature value is the first predetermined temperature value plus 1.5 degrees in Celsius.

Step 53 is determining whether the second coefficient of performance is greater or equal to the first coefficient of performance; in a case where the second coefficient of performance is greater or equal to the first coefficient of performance, executing step 55; in a case where the second coefficient of performance is not greater or equal to the first coefficient of performance, executing step 54.

Step 54 is turning on the air-conditioning device corresponding to the first coefficient of performance.

Step 55 is turning on the air-conditioning device corresponding to the second coefficient of performance.

In a case where the air-conditioning devices in the air-conditioning system is insufficient, these air-conditioning devices might be operating under a high-load condition to realize user requirements (for example, the outdoor temperature is reduced to 20°C). However, high-load operation leads to reduction of coefficient of performance of the air-conditioning devices. Therefore, by means of proper increasement of the number of the air-conditioning devices, the stability and coefficient of performance of the air-conditioning system are able to be improved and the overloaded operation of the air-conditioning system is able to be avoided.

In some examples, the control method also includes a startup method for maintaining the startup mode of the air-conditioning system corresponding to the maximum total coefficient of performance. The method for maintaining the startup mode of the air-conditioning system corresponding to the maximum total coefficient of performance includes step 61.

Step S61 is maintaining the target startup mode of the air-conditioning system corresponding to the maximum total coefficient of performance in the case where the chilled water supply temperature value is greater than the first predetermined temperature value and less than the second predetermined temperature value.

For example, the target startup mode of the air-conditioning system corresponding to the maximum total coefficient of performance in step 13 is maintained as the startup mode of the air-conditioning system at the predicting time in a case where the chilled water supply temperature value is greater than the first predetermined temperature value and less than the first predetermined temperature value plus 1.5 degrees in Celsius.

In some examples, five minutes before a next hour of the air-conditioning system's operation, a control solution for the startup method of the air-conditioning system is able to be realized in accordance with steps 41 to 46, steps 51 to 55, and step 61, thereby achieving feedforward control and energy-conserving operation of the air-conditioning system.

Through determination of whether an air-conditioning device is required to be increased or reduced and executing a relevant control step, the frequent startup-shutdown of the air-conditioning device in the air-conditioning system is able to be avoided, so as to increase the service life of the air-conditioning system and realize the optimized control of the air-conditioning system, thereby reducing the operating energy consumption of the air-conditioning system.

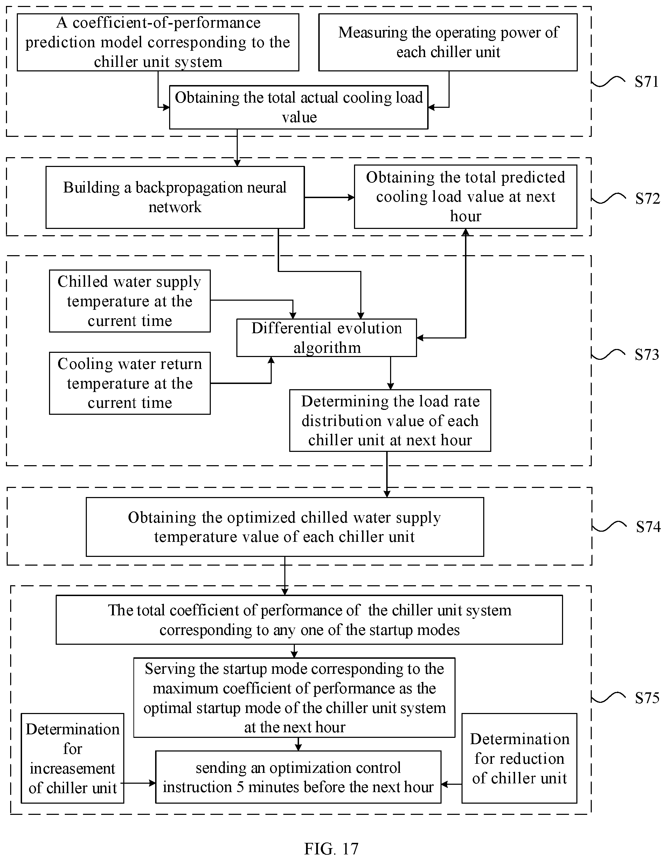

FIG. 17 is a flow chart of a control method of the chiller unit system according to some examples.

In some examples, the air-conditioning system is a chiller unit system which includes a plurality of chiller units (i.e., air-conditioning devices).

In the following, in conjunction with FIG. 17, an advance-optimization control method for the chiller unit system is elaborated. The advance-optimization control method includes steps 71 to 75.

Step 71 is obtaining the total actual cooling load value.

For example, by building the coefficient-of-performance prediction model corresponding to the chiller unit system and measuring the operating power of each chiller unit, the total actual cooling load value at the current time is obtained. For example, step 71 is executed referring to steps 21 to 23.

Step 72 is building a BP neural network model and obtaining the total predicted cooling load value at next hour.

For example, step 72 is able to be executed in accordance with steps 111 to 113.

Step 73 is determining the load rate distribution value of each chiller unit of next hour by using the differential evolution algorithm according to the chilled water supply temperature, cooling water return temperature of the current time, and the total predicted cooling load value of next hour.

For example, step 73 is able to be executed referring to step 31.

Step 74 is obtaining the optimized chilled water supply temperature of each chiller unit according to the load rate distribution value.

For example, step 74 is able to be executed referring to steps 32 to 33.

Step 75 is optimizing the quantity of chiller units.

For example, the step of optimizing the quantity of chiller units include: obtaining a total coefficient of performance of the chiller unit system corresponding to any one of the startup modes, the startup mode of the chiller unit system corresponding to the maximum total coefficient of performance serving as an optimal startup mode of the chiller unit system of next hour; and sending an optimization control instruction 5 minutes before the next hour.

For example, in step 75, the chiller unit in the chiller unit system is able to be increased or reduced by executing steps S401 to S406, steps S501 to S505, and step S601.

Such that, based on an optimal quantity of the chiller units for operation and the load rate distribution, the quantity of the chiller units is adjusted hourly, and a water supply setting temperature of each chiller unit is reset, which is able to guarantee the safety and stability of operation of the chiller system. In a case where the chiller units in the chiller unit system increases or reduces, steps 73 and 74 are able to be repeated to find an optimal distribution means of load rate and reset the water supply temperature of each chiller unit.

The advance-optimization control method includes: obtaining the total predicted cooling load value of the chiller unit system at the predicting time in accordance with the outdoor temperature, outdoor relative humidity reading, and total actual cooling load value of the chiller unit system under the historical time, and then obtaining the total coefficient of performance of the chiller unit system corresponding to any one of the startup modes in accordance with the total predicted cooling load value and the operating power of each chiller unit. Since the coefficient of performance is a ratio of transform efficiency of energy source, the larger the coefficient of performance is, the more electric energy is conserved. Thus, the target startup mode of the chiller unit system corresponding to the maximum total coefficient of performance serves as the startup mode of the chiller unit system at the predicting time.

Therefore, through adding a determination of whether it is required to increase or reduce a chiller unit, the frequent startup-shutdown of the chiller unit is able to be reduced, so as to increase the service life of the chiller unit system, and realize the feedforward optimization control of the chiller unit system, and reduce the operating energy consumption of the chiller unit system.

Taking a refrigerating-plant room system (i.e., the air-conditioning system) of a hotel building as an example, the control method of air-conditioning system is elaborated as follows.

The refrigerating-plant room system includes three chiller units, of which two chiller units are frequency conversion centrifugal chiller units with 500 Refrigeration Ton (RT), and the other chiller unit is frequency conversion centrifugal chiller unit with 400 RT. The control method of air-conditioning system includes steps 81 to 85.

Step 81 is obtaining the total predicted cooling load value.

For example, step S81 includes steps 811 to 813.

The step 811 is to build the coefficient-of-performance prediction model corresponding to the chiller unit system according to the chilled water supply temperatures, cooling water return temperatures, cooling load rates, and actual coefficients of performance of the chiller unit system at the historical times, as well as formula (5). The coefficient-of-performance prediction model is trained using a plenty of historical data to obtain model identification coefficients of the three chiller units. A fitting result of the model of the first chiller unit (500RT) includes: A is - 4.74375, B is 0.02529, C is - 0.00001, D is - 0.02952, E is - 0.14628, F is 0.02047, G is 12.21102, H is - 0.80367, I is - 0.18150, and J is 8.11102. A fitting result of the model of the second chiller unit (500RT) includes: A is - 9.20506, B is 0.04685, C is 0.00245, D is 0.25566, E is - 0.27021, F is - 0.00483, G is 20.15267, H is - 0.62736, I is - 0.11550, and J is 0.86570. The fitting result of the model of the second chiller unit (400RT) includes: A is - 9.20506, B is 0.04685, C is 0.00245, D is 0.25566, E is - 0.27021, F is - 0.00483, G is 20.15267, H is - 0.62736, I is - 0.11550, and J is 0.86570. The step 812 is obtaining the predicted coefficient of performance of each chiller unit by inputting the chilled water supply temperature, cooling water return temperature, cooling load rate of each chiller unit based on the model identification coefficients of the above three chiller units using formula (5).

Step 813 is obtaining the actual cooling load value of each chiller unit by calculation according to the predicted coefficient of performance and operating power of each chiller unit using formula (6), in which the operating power of each chiller unit is measured.

Step 82 is obtaining the total predicted cooling load value at the predicting time based on the BP neural network model.

For example, step 82 includes step 821 and step 822.

Step 821 is building and training a target BP neural network model.

For example, the historical data at the corresponding times of 01:00:00, 02:00:00, 03:00:00, 04:00:00, 05:00:00 on the typical meteorological day of May 2nd, and 20:00:00, 21:00:00, 22:00:00, 23:00:00, 24:00:00 on the typical meteorological day of July 24th is obtained as a training dataset. The training dataset (for example, including: the outdoor temperature one hour ago, the outdoor relative humidity reading one hour ago, the total cooling load value at the corresponding time 24 hours ago, the total cooling load value three hours ago, the total cooling load value two hours ago, and the total cooling load value one hour ago) serves as input of the input layer of the BP neural network model. The input layer has a total of six layers. The number of nodes in the hidden layer is fourteen. The output layer outputs a training target value. The target value is the total cooling load value of the chiller unit system at a corresponding time. The second backpropagation neural network model configured to predict the cooling load value is trained. Based on the second backpropagation neural network model, the historical data at the corresponding times of 01:00:00, 02:00:00, 03:00:00, 04:00:00, 05:00:00 on the typical meteorological day of July 25th, and 20:00:00, 21:00:00, 22:00:00, 23:00:00, 24:00:00 on the typical meteorological day of September 30th is obtained as a test dataset. The second backpropagation neural network model is trained. The outdoor temperature one hour ago, the outdoor relative humidity reading one hour ago, the total cooling load value at the corresponding time 24 hours ago, the total cooling load value three hours ago, the total cooling load value two hours ago, and the total cooling load value one hour ago serv as the input of the input layer of the BP neural network model. The input layer has a total of six layers. The number of nodes in the hidden layer is fourteen. The output layer outputs a test target value. The target value is the total cooling load value of the chiller unit system at the corresponding time. Step 822 is obtaining the total predicted cooling load value at the predicting time.

For example, predictions for whole-day times from August 26th to August 31st is made. The outdoor temperatures one hour before the predicting time, the outdoor relative humidity readings one hour before the predicting time, the total cooling load values 24 hours before the predicting time, the total cooling load values three hours before the predicting time, the total cooling load values two hours before the predicting time, and the total cooling load values one hour before the predicted time as the input of the input layer of the BP neural network model. The input layer has a total of six layers; the number of nodes in the hidden layer is fourteen. The output layer outputs the training target value, and the target value is the total predicted cooling load value of the chiller unit system at the predicted time.

Step 83 is solving an optimizing distribution means of load rate of the chiller unit based on the differential evolution algorithm.

For example, with the total predicted coefficient of performance of the chiller unit system being the objective function, the load rate distribution value of each air-conditioning device at the predicting time is determined by using the differential evolution algorithm in accordance with the chilled water supply temperature, cooling water return temperature, and total predicted cooling load value.

For example, an optimized load rate value of the chiller unit at next hour is able to be solved by calculation using the differential evolution algorithm through formula (7) corresponding to the total predicted coefficient of performance of the chiller unit system as the objective function and formula (8) corresponding to the constraint condition.

In some examples, distribution proportions of load rate of two chiller units with 500 RT are same, and the performance of a chiller unit with 500 RT is better than that of a chiller unit with 400 RT. Therefore, the chiller unit with 500 RT is the chiller.

Step 84 is setting a chiller-unit water-supply temperature in an optimized way.

For example, according to the load rate distribution value, the distributed cooling load value of each chiller unit is obtained. The optimized chilled water supply temperature of each chiller unit is obtained by using formula (9) in accordance with the heat capacity of water, the chilled water flow rate and cooling water return temperature of each chiller unit, and the distributed load value of each chiller unit.

Step 85 setting a control means for the quantity of chiller units in an optimized way.

For example, the step of setting a control means for the quantity of chiller units in an optimized way includes: obtaining the total coefficient of performance of the chiller unit system corresponding to any one of the startup modes in accordance with the total predicted cooling load value and the operating power of each air-conditioning device. The target startup mode of the chiller unit system corresponding to the maximum total coefficient of performance serves as the startup mode of the chiller unit system at the predicting time.

In some examples, to avoid the frequent startup-shutdown of chiller, steps 41 to 46, steps 51 to 55, and step 61 are added to determine whether a chiller unit is required to be added or removed.

After using the control method provided in some examples of the present disclosure from August 26th to August 31th, the energy consumption and energy efficiency of the chiller unit system, as well as the original energy consumption and energy efficiency of the chiller unit system without using the control method provided in some embodiments of the present disclosure, are shown in Table 4 below. Referring to Table 4, by using the control method, the energy consumption is able to be reduced by 6.18%, achieving the energy-conserving operation of the chiller unit system.

Table 4

| Energy consumption before optimization (kW/h) | Energy consumption after feedforward control optimization (kW/h) | Energy-conserving rate (%) |
|---|---|---|
| 39858.55 | 37538.78 | 6.18 |

Some of the above examples mainly introduce the present disclosure from a methodological view. To implement the above functions, hardware structures and/or software modules corresponding to execution of each function are provided in some examples of the present disclosure. A person skilled in the art should be readily aware that, in combination with the modules and algorithmic steps of each example described in some examples of the present disclosure, some examples of the present disclosure are able to be realized in the form of hardware or a combination of hardware and computer software. Whether a function is performed by hardware or by computer software driving the hardware depends on a particular application and a design constraint of the technical solution. A skilled person may use different methods to realize the described functions for each specific application, but such realization shall not be considered beyond the scope of the disclosure.

Some examples of the present disclosure are able to divide the functions of the controller 40 in terms of functional modules according to the above examples of method. For example, the functions are able to be divided into respective functional modules, or two or more functions are able to be integrated into one processing module. The above integrated modules are able to be implemented in the form of hardware or in the form of software functional modules. In some examples of the present disclosure, the division of the modules is exemplary and is merely a logical functional division. There may be other division means in actual implementation.

FIG. 6 is a structure diagram of another controller according to some examples. As shown in FIG. 6, the controller 40 includes a processor 401. In some examples, the controller 40 also includes a memory 402 and a communication interface 403 both connected to the processor 401. The processor 401, memory 402, and communication interface 403 are connected to each other through a bus 404.

In some examples, the processor 401 may be a Central Processing Unit (CPU), a general processor, a Network Processor (NP), a Digital Signal Processor (DSP), etc.

In some examples, the memory 402 may be a Read-only Memory (ROM) or other types of static storage devices which are able to store static information and instructions, a Random Access Memory (RAM) or other types of dynamic storage devices which are able to store information and instructions, and it is not limited in the present disclosure.

In some examples, the communication interface 403 is configured to communicate with other devices or communication networks, such as an Ethernet, a Radio Access Network (RAN), a Wireless Local Area Network (WLAN), etc.

In some examples, the bus 404 may be a Peripheral Component Interconnect (PCI) bus or an Extended Industry Standard Architecture (EISA) bus, etc. The bus 404 is able to be divided into an address bus, a data bus, and a control bus, etc. For convenience of illustration, only a thick line is shown in FIG. 6 to represent the bus 404, but this does not mean that there is only one bus or one type of bus.

It is understood by those skilled in the art that the scope of the disclosure of the invention is not limited to the above specific examples. Certain elements of the examples may be modified and replaced without leaving the spirit of the disclosure. The scope of the disclosure is limited by the attached claims.

## Claims

1. An air-conditioning system, comprising:

   a cooling tower, configured to assist cooling water to reduce temperature;
   a chiller unit, comprising a condenser; a cooling water circuit consisting of the condenser and the cooling tower, wherein the cooling water is cycled in the cooling water circuit;
   a controller, electrically connected to the cooling tower and the chiller unit, wherein the controller is configured to:

      obtain a current operating condition of the cooling tower and a plurality of groups of control strategies under the current operating condition, wherein the current operating condition is determined through a current outdoor dry-bulb temperature and a current outdoor relative humidity reading, wherein a control strategy comprises a designed cooling water temperature difference, a designed cooling water flow rate, and a first approach degree;
      determine first operating powers of the cooling tower corresponding to the plurality of groups of control strategies under the current operating condition according to the current operating condition, the plurality of groups of control strategies, and a first energy consumption model, wherein the first energy consumption model is configured to represent a relationship between the first operating powers of the cooling tower and the control strategies;
      determine a target control strategy according to the first operating powers of the cooling tower corresponding to the plurality of groups of control strategies, wherein the target control strategy is a control strategy corresponding to a minimum first operating power of the cooling tower in the plurality of groups of control strategies;
      determine a target operating frequency of the cooling tower according to the minimum first operating power of the cooling tower and a second energy consumption model, wherein the second energy consumption model is configured to represent a relationship between the first operating powers of the cooling tower and the target operating frequency; and
      control the cooling tower to operate according to the target control strategy and the target operating frequency.

2. The air-conditioning system according to claim 1, further comprising:

   a first temperature sensor, configured to detect an outdoor dry-bulb temperature;
   a humidity sensor, configured to detect an outdoor relative humidity reading;
   a second temperature sensor, configured to detect a first temperature, wherein the first temperature is a temperature of the cooling water in a case where the cooling water entries the cooling tower;
   a third temperature sensor, configured to detect a second temperature, wherein the second temperature is a temperature of the cooling water in a case where the cooling water flows out of the cooling tower; and
   a flowmeter, configured to detect a flow rate of the cooling water;
   wherein the first temperature sensor, the humidity sensor, the second temperature sensor, the third temperature sensor, and the flowmeter are electrically connected to the controller;
   the controller being further configured to:

obtain pieces of historical data information of the cooling tower under a plurality of historical operating conditions within a predetermined period, as well as historical operating powers, historical operating frequencies and rated operating powers all corresponding to the pieces of historical data information, wherein a piece of historical data information under a historical operating condition comprises a historical wet-bulb temperature, a historical control strategy and a predetermined wet-bulb temperature, a predetermined cooling water temperature difference, a predetermined cooling water flow rate, and a predetermined approach degree all corresponding to the historical operating condition, wherein the historical control strategy comprises a historical cooling water temperature difference, a historical cooling water flow rate and a historical approach degree, wherein the historical wet-bulb temperature is determined by the historical outdoor dry-bulb temperature and the historical outdoor relative humidity reading both in the historical operating condition;

obtain pieces of first data information by removing a part of the pieces of historical data information corresponding to a historical operating frequency less than a first predetermined frequency, a historical operating frequency greater than a second predetermined frequency, and a historical operating power greater than a first predetermined power and less than a second predetermined power from the pieces of historical data information under the plurality of historical operating conditions;

obtain pieces of second data information by performing dimensionless processing on the pieces of first data information; and

obtain the first energy consumption model by performing fitting and regression processing on the pieces of second data information through a least square method.

3. The air-conditioning system according to claim 1 or 2, wherein the first energy consumption model comprises:

$$\frac{P}{P_e} = a(\frac{\Delta T}{\Delta T_e})^2 + b(\frac{T_{app}}{T_{app,e}})^2 + c(\frac{T_{wb}}{T_{wb,e}})^2 + d(\frac{m_{cw}}{m_{cw,e}})^2 + e(\frac{\Delta T}{\Delta T_e})(\frac{T_{app}}{T_{app,e}}) +$$
$$r(\frac{\Delta T}{\Delta T_e})(\frac{T_{wb}}{T_{wb,e}}) + g(\frac{\Delta T}{\Delta T_e})(\frac{m_{cw}}{m_{cw,e}}) + h(\frac{T_{app}}{T_{app,e}})(\frac{T_{wb}}{T_{wb,e}}) + i(\frac{T_{app}}{T_{app,e}})(\frac{m_{cw}}{m_{cw,e}}) +$$
$$j(\frac{T_{wb}}{T_{wb,e}})(\frac{m_{cw}}{m_{cw,e}}) + k(\frac{\Delta T}{\Delta T_e}) + l(\frac{T_{app}}{T_{app,e}}) + m(\frac{T_{wb}}{T_{wb,e}}) + n(\frac{m_{cw}}{m_{cw,e}}) + o$$

wherein P represents a historical operating power, $P_e$ represents a rated operating power, $\Delta T$ represents a historical cooling water temperature difference, $\Delta T_e$ represents a predetermined cooling water temperature difference, $T_{app}$ represents a historical approach degree, $T_{wb,e}$ represents a predetermined approach degree, $T_{wb}$ represents a historical wet-bulb temperature, $m_{cw}$ represents a historical cooling water flow rate, $m_{cw,e}$ represents a predetermined cooling water flow rate, and a, b, c, d, e, r, g, h, i, r, k, l, m, n, and o, represent respective parameters of the first energy consumption model.

4. The air-conditioning system according to any one of claims 1 to 3, wherein the controller is further configured to:

obtain historical operating frequencies and rated operating frequencies of the cooling tower corresponding to pieces of second data information within a predetermined period; and

obtain the second energy consumption model by performing fitting and regression processing on historical operating powers, the historical operating frequencies, the rated operating powers, and the rated operating frequencies of the cooling tower all corresponding to the pieces of second data information through a least square method.

5. The air-conditioning system according to claim 4, wherein the second energy consumption model comprises:

$$\frac{P}{P_e} = A(\frac{f}{f_e})^2 + B(\frac{f}{f_e}) + C$$

wherein $P$ represents the historical operating power, $P_e$ represents the rated operating power, $f$ represents a target operating frequency, $f_e$ represents the rated operating frequency; A, B, and C represent respective parameters of the second energy consumption model.

6. A control method of air-conditioning system, wherein the air-conditioning system comprises:

a cooling tower, configured to assist cooling water to reduce temperature;
a chiller unit, comprising a condenser; a cooling water circuit consisting of the condenser and the cooling tower, wherein the cooling water is cycled in the cooling water circuit;
the method comprising:

obtaining a current operating condition of the cooling tower and a plurality of groups of control strategies under the current operating condition, wherein the current operating condition is determined through a current outdoor dry-bulb temperature and a current outdoor relative humidity reading, wherein a control strategy comprises a designed cooling water temperature difference, a designed cooling water flow rate, and a first approach degree;
determining first operating powers of the cooling tower corresponding to the plurality of groups of control strategies under the current operating condition according to the current operating condition, the plurality of groups of control strategies, and a first energy consumption model, wherein the first energy consumption model is configured to represent a relationship between the first operating powers of the cooling tower and the control strategies;
determining a target control strategy according to the first operating powers of the cooling tower corresponding to the plurality of groups of control strategies, wherein the target control strategy is a control strategy corresponding to a minimum first operating power of the cooling tower in the plurality of groups of control strategies;
determining a target operating frequency of the cooling tower according to the minimum first operating power of the cooling tower and a second energy consumption model, wherein the second energy consumption model is configured to represent a relationship between the first operating powers of the cooling tower and the target operating frequency; and
controlling the cooling tower to operate according to the target control strategy and the target operating frequency.

7. The control method of air-conditioning system according to claim 6, wherein the air-conditioning system comprises:

a first temperature sensor, configured to detect an outdoor dry-bulb temperature;
a humidity sensor, configured to detect an outdoor relative humidity reading;
a second temperature sensor, configured to detect a first temperature, wherein the first temperature is a temperature of the cooling water in a case where the cooling water entries the cooling tower;
a third temperature sensor, configured to detect a second temperature, wherein the second temperature is a temperature of the cooling water in a case where the cooling water flows out of the cooling tower; and
a flowmeter, configured to detect a flow rate of the cooling water;
the method further comprising:

obtaining pieces of historical data information of the cooling tower within a predetermined period under a plurality of historical operating conditions, and historical operating powers, historical operating frequencies, and rated operating powers all corresponding to the pieces of historical data information, wherein a piece of historical data information under a historical operating condition comprises a historical wet-bulb temperature, a historical control strategy, and a predetermined wet-bulb temperature, a predetermined cooling water temperature difference, a predetermined cooling water flow rate, and a predetermined approach degree all corresponding to the historical operating condition, wherein the historical control strategy comprises a historical cooling water temperature difference, a historical cooling water flow rate, and a historical approach degree, wherein the historical wet-bulb temperature is determined by the historical outdoor dry-bulb temperature and the historical outdoor relative humidity reading both in the historical operating condition;
obtaining pieces of first data information by removing a part of the pieces of historical data information corresponding to a historical operating frequency less than a first predetermined frequency, a historical operating frequency greater than a second predetermined frequency, and a historical operating power greater than a first predetermined power and less than a second predetermined power from the pieces of historical data information under the plurality of historical operating conditions,
obtaining pieces of second data information by performing dimensionless processing on the pieces of first data information; and
obtaining the first energy consumption model by performing fitting and regression processing on the pieces of second data information through a least square method.

8. The control method of air-conditioning system according to claim 6 or 7, wherein the first energy consumption model

comprises:

$$\frac{P}{P_e} = a(\frac{\Delta T}{\Delta T_e})^2 + b(\frac{T_{app}}{T_{app,e}})^2 + c(\frac{T_{wb}}{T_{wb,e}})^2 + d(\frac{m_{cw}}{m_{cw,e}})^2 + e(\frac{\Delta T}{\Delta T_e})(\frac{T_{app}}{T_{app,e}}) +$$

$$r(\frac{\Delta T}{\Delta T_e})(\frac{T_{wb}}{T_{wb,e}}) + g(\frac{\Delta T}{\Delta T_e})(\frac{m_{cw}}{m_{cw,e}}) + h(\frac{T_{app}}{T_{app,e}})(\frac{T_{wb}}{T_{wb,e}}) + i(\frac{T_{app}}{T_{app,e}})(\frac{m_{cw}}{m_{cw,e}}) +$$

$$j(\frac{T_{wb}}{T_{wb,e}})(\frac{m_{cw}}{m_{cw,e}}) + k(\frac{\Delta T}{\Delta T_e}) + l(\frac{T_{app}}{T_{app,e}}) + m(\frac{T_{wb}}{T_{wb,e}}) + n(\frac{m_{cw}}{m_{cw,e}}) + o$$

wherein P represents a historical operating power, $P_e$ represents a rated operating power, $\Delta T$ represents a historical cooling water temperature difference, $\Delta T_e$ represents a predetermined cooling water temperature difference, $T_{app}$ represents a historical approach degree, $T_{wb,e}$ represents a predetermined approach degree, $T_{wb}$ represents a historical wet-bulb temperature, $m_{cw}$ represents a historical cooling water flow rate, $m_{cw,e}$ represents a predetermined cooling water flow rate, and a, b, c, d, e, r, g, h, i, r, k, l, m, n, and o, represent respective parameters of the first energy consumption model.

9. The control method of air-conditioning system according to any one of claims 6 to 8, further comprising:

obtaining historical operating frequencies and rated operating frequencies of the cooling tower corresponding to pieces of second data information within a predetermined period; and
obtaining the second energy consumption model by performing fitting and regression processing on historical operating powers, the historical operating frequencies, the rated operating powers, and the rated operating frequencies of the cooling tower all corresponding to the pieces of second data information through a least square method.

10. The control method of air-conditioning system according to claim 9, wherein the second energy consumption model comprises:

$$\frac{P}{P_e} = A(\frac{f}{f_e})^2 + B(\frac{f}{f_e}) + C$$

wherein P represents the historical operating power, $P_e$ represents the rated operating power, $f$ represents a target operating frequency, $f_e$ represents the rated operating frequency; A, B, and C represent respective parameters of the second energy consumption model.

11. An air-conditioning system, comprising:

at least two air-conditioning devices; and
a controller, electrically connected to the two air-conditioning devices, wherein the controller is configured to:

obtain a total predicted cooling load value of the air-conditioning system at a predicting time according to outdoor temperatures, outdoor relative humidity readings, and total actual cooling load values of the air-conditioning system under historical times;
obtain total coefficients of performance of the air-conditioning system corresponding to various startup modes according to the total predicted cooling load value and an operating power of each air-conditioning device, wherein the various startup modes comprise that at least one air-conditioning device of the at least two air-conditioning devices is turned on; and
obtain a target startup mode and serving the target startup mode as a startup mode of the air-conditioning system at the predicting time, wherein the target startup mode is a startup mode of the air-conditioning system corresponding to a maximum total coefficient of performance in the total coefficients of performance corresponding to the various startup modes.

12. The air-conditioning system according to claim 11, wherein the controller is further configured to:

build a coefficient-of-performance prediction model corresponding to the air-conditioning system in accordance with the chilled water supply temperatures, cooling water return temperatures, cooling load rates, and actual coefficients of performance of the air-conditioning system under the historical times, before obtaining the total predicted cooling load value of the air-conditioning system at the predicting time;

obtain a total predicted coefficient of performance of the air-conditioning system by inputting a chilled water supply temperature, a cooling water return temperature, and a cooling load rate of the air-conditioning system, based on the coefficient-of-performance prediction model, and;

obtain a total actual cooling load value of the air-conditioning system based on the total predicted coefficient of performance and an operating power of the air-conditioning system.

13. The air-conditioning system according to claim 12, wherein the controller is further configured to:

after obtaining the total predicted cooling load value of the air-conditioning system at the predicting time, determine a load rate distribution value of each air-conditioning device at the predicting time by means of a differential evolution algorithm according to the chilled water supply temperatures, the cooling water return temperatures, and the total predicted cooling load value with serving the total predicted coefficient of performance of the air-conditioning system as an objective function.

14. The air-conditioning system according to claim 13, wherein the controller is further configured to:

obtain a distributed cooling load value of each air-conditioning device according to the load rate distribution value;

obtain an optimized chilled water supply temperature value of each air-conditioning device according to a heat capacity of water, a chilled water flow rate and a cooling water return temperature of each air-conditioning device, and a distributed cooling load value of each air-conditioning device.

15. The air-conditioning system according to any one of claims 11 to 14, wherein, the obtaining a total predicted cooling load value of the air-conditioning system at a predicting time according to outdoor temperatures, outdoor relative humidity readings, and total actual cooling load values of the air-conditioning system under historical times comprises:

outputting a total cooling load value at a current time based on a first backpropagation neural network model by inputting an outdoor temperature, an outdoor relative humidity reading, and the total actual cooling load value at a first historical time, and building a second backpropagation neural network model configured to predict a cooling load value;

obtaining the total predicted cooling load value at the predicted time as an output based on the second backpropagation neural network model by inputting an outdoor temperature, an outdoor relative humidity reading, and a total actual cooling load value at a second historical time.

16. The air-conditioning system according to any one of claims 11 to 15, wherein the controller is further configured to:

obtain an average cooling load value of the air-conditioning system within a predetermined period before the predicting time after obtaining the target startup mode and serving the target startup mode as the startup mode of the air-conditioning system at the predicting time;

determine whether a chilled water supply temperature value is less than or equal to a first predetermined temperature value in a case where a cooling load rate of the air-conditioning system is less than a predetermined load rate;

determine whether the average cooling load value is less than a predetermined scaling factor of a second refrigeration capacity in a case where the chilled water supply temperature value is less than or equal to the first predetermined temperature value;

turn on an air-conditioning device corresponding to the second refrigeration capacity and turn off an air-conditioning device corresponding to a first refrigeration capacity in a case where the average cooling load value is greater than the predetermined scaling factor of the second refrigeration capacity, wherein the second refrigeration capacity is less than the first refrigeration capacity;

determine whether a second coefficient of performance is greater than or equal to a first coefficient of performance in a case where the average cooling load value is less than or equal to the predetermined scaling factor of the second refrigeration capacity, wherein an air-conditioning device corresponding to the first coefficient of performance is the air-conditioning device corresponding to the first refrigeration capacity and an air-conditioning device corresponding to the second coefficient of performance is the air-conditioning device corresponding to the second refrigeration capacity;

turn on the air-conditioning device corresponding to the second coefficient of performance and turn off the air-conditioning device corresponding to the first coefficient of performance in a case where the second coefficient of performance is greater than or equal to the first coefficient of performance; and

turn on the air-conditioning device corresponding to the first coefficient of performance and turn off the air-conditioning device corresponding to the second coefficient of performance in a case where the second coefficient of performance is less than the first coefficient of performance.

17. The air-conditioning system according to claim 16, wherein the controller is further configured to:

determine whether the chilled water supply temperature value is greater than or equal to a second predetermined temperature value;

determine whether the average cooling load value is less than a predetermined scaling factor of the first refrigeration capacity in a case where the chilled water supply temperature value is greater than or equal to the second predetermined temperature value, wherein the second predetermined temperature value is greater than the first predetermined temperature value;

turn on an air-conditioning device corresponding to the second refrigeration capacity in a case where the average cooling load value is greater than the predetermined scaling factor of the first refrigeration capacity;

determine whether the second coefficient of performance is greater than or equal to the first coefficient of performance in a case where the average cooling load value is less than or equal to the predetermined scaling factor of the first refrigeration capacity;

turn on the air-conditioning device corresponding to the second coefficient of performance in a case where the second coefficient of performance is greater than or equal to the first coefficient of performance;

turn on the air-conditioning device corresponding to the first coefficient of performance in a case where the second coefficient of performance is less than the first coefficient of performance.

18. The air-conditioning system according to claim 17, wherein the controller is further configured to:
maintain the target startup mode as the startup mode of the air-conditioning system at the predicting time in a case where the chilled water supply temperature value is greater than the first predetermined temperature value and less than the second predetermined temperature value.

19. A control method of air-conditioning system, comprising:

obtaining a total predicted cooling load value of the air-conditioning system at a predicting time according to outdoor temperatures, outdoor relative humidity readings, and total actual cooling load values of the air-conditioning system under historical times;

obtaining total coefficients of performance of the air-conditioning system corresponding to various startup modes according to the total predicted cooling load value and an operating power of each air-conditioning device, wherein the various startup modes comprise that at least one air-conditioning device of the at least two air-conditioning devices is turned on; and

obtaining a target startup mode and serving the target startup mode as a startup mode of the air-conditioning system at the predicting time, wherein the target startup mode is a startup mode of the air-conditioning system corresponding to a maximum total coefficient of performance in the total coefficients of performance corresponding to the various startup modes.

20. The control method according to claim 19, further comprising:

building a coefficient-of-performance prediction model corresponding to the air-conditioning system in accordance with the chilled water supply temperatures, cooling water return temperatures, cooling load rates, and actual coefficients of performance of the air-conditioning system under the historical times, before obtaining the total predicted cooling load value of the air-conditioning system at the predicting time;

obtaining a total predicted coefficient of performance of the air-conditioning system by inputting a chilled water supply temperature, a cooling water return temperature, and a cooling load rate of the air-conditioning system, based on the coefficient-of-performance prediction model, and;

obtaining a total actual cooling load value of the air-conditioning system based on the total predicted coefficient of performance and an operating power of the air-conditioning system.

FIG. 1

FIG. 2

101

1013

1014

1011

1012

FIG. 3

1

40

| 101 Chiller unit | ⟷ | | ⟷ | Second temperature sensor | 108 |
| 104 Chilled water pump | ⟷ | | ⟷ | Third temperature sensor | 109 |
| 105 Cooling water pump | ⟷ | Controller | ⟷ | Humidity sensor | 110 |
| 106 Cooling tower | ⟷ | | ⟷ | Flowmeter | 111 |
| 107 First temperature sensor | ⟷ | | | | |

FIG. 4

obtaining a current operating condition and a plurality of groups of control strategies under the current operating condition ⟋ S101

↓

determining first operating powers of the cooling tower corresponding to respective groups of control strategies under the current operating condition according to the current operating condition, the plurality of groups of control strategies, and a first energy consumption model ⟋ S102

↓

determining a target control strategy according to the first operating powers of the cooling tower corresponding to respective groups of control strategies ⟋ S103

↓

determining a target operating frequency of the cooling tower according to the first operating powers corresponding to the target control strategy and a second energy consumption model ⟋ S104

↓

controlling the cooling tower to operate according to the target control strategy and the target operating frequency ⟋ S105

FIG. 5

Controller 40

Processor ~ 401

Communication interface ~ 403

Bus 404

Memory

402

FIG. 6

Target room

Controller 40

Air conditioning system 1

Air conditioning device 11

Air conditioning device 12

ñ ñ

Air conditioning device n

FIG. 7

120

Sensor component

Control component

Power supply

130

Communication component

140

150

FIG. 8

obtaining the total predicted cooling load value of the air conditioning system at a predicting time in accordance with the outdoor temperatures, outdoor relative humidity readings, and total actual cooling load values of the air conditioning system under historical times ⌒ S11

obtaining a total coefficient of performance of the air conditioning system corresponding to any one of the startup modes according to the total predicted cooling load value and an operating power of each air conditioning device ⌒ S12

obtaining the target startup mode serving as the startup mode of the air conditioning system at the predicting time ⌒ S13

FIG. 9

outputting the total cooling load value at the current time by inputting the outdoor temperature, outdoor relative humidity, and total actual cooling load value at the first historical time based on the first backpropagation neural network model, so as to build the second backpropagation neural network model for predicting a cooling load value ⌒ S11 1

obtaining an output total predicted cooling load value at the predicting time by inputting the outdoor temperature, outdoor relative humidity, and total actual cooling load value at the second historical time based on the second backpropagation neural network model ⌒ S11 2

FIG. 10

Input layer    Hidden laye    Output layer

Outdoor temperature
one hour ago

Outdoor relative
humidity one hour ago

Total cooling load value
one hour ago

Total cooling load value
two hours ago

Total cooling load value
three hours ago

Total cooling load value
twenty-four hours ago

Cooling load
value at next hour

FIG. 11

building a coefficient-of-performance prediction model
corresponding to the air conditioning system according to chilled
water supply temperatures, cooling water return temperatures,
cooling load rates, and actual coefficients of performance of the
air conditioning system under historical times

S21

obtaining the total coefficients of performance of the air
conditioning system by inputting the chilled water supply
temperatures, cooling water return temperatures, cooling load
rates of the air conditioning system to the coefficient-of-
performance prediction model corresponding to the air
conditioning system

S22

obtaining the total actual cooling load value based on the total
predicted coefficient of performance and operating power of the
air conditioning system

S23

FIG. 12

determining a load rate distribution value of each air conditioning device at the predicting time by using a differential evolution algorithm according to the chilled water supply temperatures, cooling water return temperatures, and total predicted cooling load value, with the total predicted coefficient of performance of the air condition system serving as an objective function — S31

obtaining a distributed cooling load value on each air conditioning device based on the load rate distribution value — S32

obtaining an optimized chilled water supply temperature of each air conditioning device according to the heat capacity of water, and the chilled water flow rate and cooling water return temperature of each air conditioning device, and the distributed cooling load value of each air conditioning device — S33

FIG. 13

| Obtaining a coefficient of performance in operating for turning on the air conditioning device 1 | Obtaining a coefficient of performance in operating for turning on the air conditioning device 2 | ñ ñ | Obtaining a coefficient of performance in operating for turning on the air conditioning device n | Obtaining coefficients of performance in operating for turning on the air conditioning device 1 and 2 | ñ ñ | Obtaining coefficients of performance in operating for turning on the air conditioning device 1, 2, ñ , and n |

S801

determining the startup mode of air conditioning system corresponding to the maximum total coefficient of performance

S802

determining whether the air conditioning system is required to increase or reduce an air conditioning device

S803

YES

NO

increasing or reducing the air conditioning device in the air conditioning system

S804

serving the startup mode corresponding to the maximum coefficient of performance as the startup mode at the next time

S805

FIG. 14

FIG. 15

Begin

obtaining an average
cooling load value    S41

S51

determining whether the chilled water supply
temperature value is greater than or equal to
the second predetermined temperature value

YES

S52

determining whether the average cooling load value
is less than the predetermined scaling factor of the
first refrigeration capacity

YES          NO

S53

determining whether the second coefficient
of performance is greater than or equal to the
first coefficient of performance      YES

NO          S55

S54

turning on the air conditioning device
corresponding to the first coefficient of
performance (first refrigeration capacity)

turning on the air conditioning
device corresponding to the
second refrigeration capacity
(second coefficient of
performance)

FIG. 16

A coefficient-of-performance prediction model corresponding to the chiller unit system

Measuring the operating power of each chiller unit

Obtaining the total actual cooling load value

S71

Building a backpropagation neural network

Obtaining the total predicted cooling load value at next hour

S72

Chilled water supply temperature at the current time

Cooling water return temperature at the current time

Differential evolution algorithm

Determining the load rate distribution value of each chiller unit at next hour

S73

Obtaining the optimized chilled water supply temperature value of each chiller unit

S74

The total coefficient of performance of the chiller unit system corresponding to any one of the startup modes

Serving the startup mode corresponding to the maximum coefficient of performance as the optimal startup mode of the chiller unit system at the next hour

Determination for increasement of chiller unit

sending an optimization control instruction 5 minutes before the next hour

Determination for reduction of chiller unit

S75

FIG. 17

## INTERNATIONAL SEARCH REPORT

| International application No. |
| --- |
| **PCT/CN2023/114293** |

| A. | CLASSIFICATION OF SUBJECT MATTER |
| --- | --- |

F24F3/00(2006.01)i; F24F11/46(2018.01)i; F24F11/61(2018.01)i; F24F11/64(2018.01)i; F24F11/85(2018.01)i; F24F11/88(2018.01)i; F24F110/12(2018.01)n; F24F110/22(2018.01)n

According to International Patent Classification (IPC) or to both national classification and IPC

| B. | FIELDS SEARCHED |
| --- | --- |

Minimum documentation searched (classification system followed by classification symbols)

IPC: F24F

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, DWPI, JPTXT: 海信, 石靖峰, 孟建军, 张文强, 阮岱玮, 王锡元, 张国轩, 魏枫, 盛凯, 冷却塔, 冷却水, 温差, 流量, 逼近度, 频率, 功率, 最小, 能耗, 节能, 历史, cooling tower, energy consumption, frequency, power, temperature difference, flow, dry bulb temperature, wet bulb temperature, relative humidity

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116007072 A (QINGDAO HISENSE HITACHI AIR CONDITIONING SYSTEM CO., LTD.) 25 April 2023 (2023-04-25)<br>claims 1-10 | 1-10 |
| A | CN 111723456 A (SOUTH CHINA UNIVERSITY OF TECHNOLOGY) 29 September 2020 (2020-09-29)<br>description, paragraphs 5-60, and figures 1-5 | 1-10 |
| A | CN 104534627 A (JIANGSU LIANHONG AUTOMATION CO., LTD.) 22 April 2015 (2015-04-22)<br>entire document | 1-10 |
| A | US 2004011066 A1 (HITACHI PLANT ENGINEERING & CONSTRUCTION CO., LTD.) 22 January 2004 (2004-01-22)<br>entire document | 1-10 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 October 2023** | **28 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/114293**

| Patent document cited in search report | | | Publication date (day/month/year) | Patent family member(s) | | | Publication date (day/month/year) |
|---|---|---|---|---|---|---|---|
| CN | 116007072 | A | 25 April 2023 | None | | | |
| CN | 111723456 | A | 29 September 2020 | None | | | |
| CN | 104534627 | A | 22 April 2015 | CN | 104534627 | B | 15 March 2017 |
| US | 2004011066 | A1 | 22 January 2004 | US | 6732540 | B2 | 11 May 2004 |
| | | | | JP | 2004053127 | A | 19 February 2004 |
| | | | | JP | 3783859 | B2 | 07 June 2006 |
| | | | | JP | 2005134110 | A | 26 May 2005 |

Form PCT/ISA/210 (patent family annex) (July 2022)

**REFERENCES CITED IN THE DESCRIPTION**

**Patent documents cited in the description**

- CN 202310155043
- CN 202310078863X